(19) **Europäisches Patentamt / European Patent Office / Office européen des brevets**

(11) **EP 4 663 698 A1**

(12) # EUROPEAN PATENT APPLICATION
published in accordance with Art. 153(4) EPC

(43) Date of publication:
**17.12.2025 Bulletin 2025/51**

(21) Application number: **24753295.5**

(22) Date of filing: **05.02.2024**

(51) International Patent Classification (IPC):
*C08L 23/10* (2006.01)     *C08F 10/06* (2006.01)
*C08K 3/013* (2018.01)     *C08L 23/08* (2025.01)
*C08L 23/14* (2006.01)

(52) Cooperative Patent Classification (CPC):
**C08F 10/06; C08K 3/013; C08L 23/08; C08L 23/10;
C08L 23/12; C08L 23/14; C08L 53/00**

(86) International application number:
**PCT/JP2024/003661**

(87) International publication number:
**WO 2024/166852 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2023 JP 2023016654**
**27.09.2023 JP 2023166488**

(71) Applicant: **Sumitomo Chemical Company, Limited
Tokyo 103-6020 (JP)**

(72) Inventors:
• **FUKURODA, Hiroshi**
**Ichihara-shi, Chiba 299-0195 (JP)**
• **KAMEO, Koji**
**Ichihara-shi, Chiba 299-0195 (JP)**
• **WATANABE, Tsuyoshi**
**Ichihara-shi, Chiba 299-0195 (JP)**

(74) Representative: **Winter, Brandl - Partnerschaft
mbB
Alois-Steinecker-Straße 22
85354 Freising (DE)**

(54) **PROPYLENE RESIN COMPOSITION AND MOLDED BODY**

(57)     Provided are a molded article having excellent hinge resistance and a propylene resin composition capable of producing the same.
A propylene resin composition contains a propylene polymer A' having an isotactic pentad fraction of less than 0.981; and a propylene polymer C having an isotactic pentad fraction of 0.981 or more, and a molded article contains the same.

EP 4 663 698 A1

**Description**

TECHNICAL FIELD

The present invention relates to a propylene resin composition and a molded article.

BACKGROUND ART

A molded article formed of a propylene resin composition is used for an automobile material, a household electric appliance material, a container packaging material, and the like.

PRIOR ART DOCUMENTS

PATENT DOCUMENTS

    Patent Document 1: JP-A-2006-193644
    Patent Document 2: WO 2020/217829

SUMMARY OF THE INVENTION

PROBLEMS TO BE SOLVED BY THE INVENTION

In recent years, a molded article used for an automobile material, a household electric appliance material, a container packaging material, and the like is required to have high hinge resistance.
An object of the present invention is to provide a propylene resin composition capable of producing a molded article having excellent hinge resistance. Another object of the present invention is to provide a molded article having excellent hinge resistance.

MEANS FOR SOLVING THE PROBLEMS

The present invention relates to the following inventions, but is not limited thereto.

[Invention A1]

A propylene resin composition containing:

    a propylene polymer A' having an isotactic pentad fraction of less than 0.981; and
    a propylene polymer C having an isotactic pentad fraction of 0.981 or more.

[Invention A2]

The propylene resin composition according to Invention A1, in which a difference between the isotactic pentad fraction of the propylene polymer A' and the isotactic pentad fraction of the propylene polymer C is 0.005 or more.

[Invention A3]

The propylene resin composition according to Invention A1 or A2, in which the propylene resin composition contains a heterophasic propylene polymerization material as the propylene polymer A'.

[Invention A4]

The propylene resin composition according to any one of Inventions A1 to A3, in which the propylene resin composition contains a heterophasic propylene polymerization material as the propylene polymer C.

[Invention A5]

The propylene resin composition according to Invention A4, in which an isotactic pentad fraction of a xylene-insoluble component contained in the heterophasic propylene polymerization material is 0.981 or more.

[Invention A6]

The propylene resin composition according to any one of Inventions A1 to A5, in which the propylene resin composition contains:

5 to 95 parts by weight of the propylene polymer A'; and
5 to 95 parts by weight of the propylene polymer C (provided that a total of the propylene polymer A' and the propylene polymer C is 100 parts by weight).

[Invention A7]

The propylene resin composition according to any one of Inventions A1 to A6, in which the propylene resin composition contains a recycled propylene polymer as at least one selected from the group consisting of the propylene polymer A' and the propylene polymer C.

[Invention A8]

The propylene resin composition according to any one of Inventions A1 to A7, in which the propylene resin composition contains a virgin propylene polymer as at least one selected from the group consisting of the propylene polymer A' and the propylene polymer C.

[Invention A9]

The propylene resin composition according to any one of Inventions A1 to A8, in which the propylene resin composition contains a propylene polymer B having an isotactic pentad fraction of 0.961 or more and less than 0.981 as the propylene polymer A'.

[Invention A10]

The propylene resin composition according to any one of Inventions A1 to A9, in which the propylene resin composition contains a propylene polymer A having an isotactic pentad fraction of less than 0.961 as the propylene polymer A'.

[Invention A11]

The propylene resin composition according to any one of Inventions A1 to A10, in which the propylene resin composition contains, as the propylene polymer A':

a propylene polymer A having an isotactic pentad fraction of less than 0.961; and
a propylene polymer B having an isotactic pentad fraction of 0.961 or more and less than 0.981.

[Invention A12]

The propylene resin composition according to Invention A10 or A11, in which the propylene resin composition contains a heterophasic propylene polymerization material as the propylene polymer A.

[Invention A13]

The propylene resin composition according to Invention A9 or A11, in which the propylene resin composition contains a heterophasic propylene polymerization material as the propylene polymer B.

[Invention A14]

The propylene resin composition according to any one of Inventions A11 to A13, in which the propylene resin composition contains:

1 to 60 parts by weight of the propylene polymer A;
5 to 94 parts by weight of the propylene polymer B; and
5 to 94 parts by weight of the propylene polymer C (provided that a total of the propylene polymer A, the propylene polymer B, and the propylene polymer C is 100 parts by weight).

[Invention A15]

The propylene resin composition according to any one of Inventions A11 to A14, in which the propylene resin composition contains a recycled propylene polymer as at least one selected from the group consisting of the propylene polymer A, the propylene polymer B, and the propylene polymer C.

[Invention A16]

The propylene resin composition according to any one of Inventions A11 to A15, in which the propylene resin composition contains a virgin propylene polymer as at least one selected from the group consisting of the propylene polymer A, the propylene polymer B, and the propylene polymer C.

[Invention A17]

The propylene resin composition according to any one of Inventions A1 to A16, further containing an ethylene-$\alpha$-olefin copolymer D.

[Invention A18]

The propylene resin composition according to Invention A17, in which the propylene resin composition contains a recycled ethylene-$\alpha$-olefin copolymer as the ethylene-$\alpha$-olefin copolymer D.

[Invention A19]

The propylene resin composition according to any one of Inventions A1 to A18, further containing a filler E.

[Invention A20]

The propylene resin composition according to Invention A19, in which the propylene resin composition contains a recycled filler as the filler E.

[Invention A21]

The propylene resin composition according to Invention A19 or A20, in which the propylene resin composition contains an inorganic filler as the filler E.

[Invention A22]

A molded article containing the propylene resin composition according to any one of Inventions A1 to A21.
Other aspects of the present invention will be described below.

[Invention B1]

A propylene resin composition containing:

10 to 90 parts by weight of a propylene polymer A' having an isotactic pentad fraction of less than 0.981; and
10 to 90 parts by weight of a propylene polymer C having an isotactic pentad fraction of 0.981 or more (provided that a total content of the propylene polymers A' and C is 100 parts by weight),

in which the propylene resin composition contains a heterophasic propylene polymerization material as the propylene polymer A',

the propylene resin composition contains a propylene polymer B having an isotactic pentad fraction of 0.963 or more and less than 0.981 as the propylene polymer A',

a difference between the isotactic pentad fraction of the propylene polymer A' and the isotactic pentad fraction of the propylene polymer C is 0.010 or more, and

a total of the contained polymers is 70 wt% or more based on a total weight of the propylene resin composition.

[Invention B2]

The propylene resin composition according to Invention B1, in which the propylene resin composition contains a heterophasic propylene polymerization material as the propylene polymer C.

[Invention B3]

The propylene resin composition according to Invention B2, in which an isotactic pentad fraction of a xylene-insoluble component contained in the heterophasic propylene polymerization material is 0.981 or more.

[Invention B4]

The propylene resin composition according to any one of Inventions B1 to B3, in which the propylene resin composition contains a recycled propylene polymer as at least one selected from the group consisting of the propylene polymer A' and the propylene polymer C.

[Invention B5]

The propylene resin composition according to any one of Inventions B1 to B4, in which the propylene resin composition contains a virgin propylene polymer as at least one selected from the group consisting of the propylene polymer A' and the propylene polymer C.

[Invention B6]

The propylene resin composition according to any one of Inventions B1 to B5, in which the propylene resin composition contains a propylene polymer A having an isotactic pentad fraction of less than 0.961 as the propylene polymer A'.

[Invention B7]

The propylene resin composition according to any one of Inventions B1 to B6, in which the propylene resin composition contains, as the propylene polymer A':

a propylene polymer A having an isotactic pentad fraction of less than 0.961; and
a propylene polymer B having an isotactic pentad fraction of 0.963 or more and less than 0.981.

[Invention B8]

The propylene resin composition according to Invention B6 or B7, in which the propylene resin composition contains a heterophasic propylene polymerization material as the propylene polymer A.

[Invention B9]

The propylene resin composition according to any one of Inventions B1 to B7, in which the propylene resin composition contains a heterophasic propylene polymerization material as the propylene polymer B.

[Invention B10]

The propylene resin composition according to any one of Inventions B7 to B9, in which the propylene resin composition contains:

1 to 60 parts by weight of the propylene polymer A;
5 to 89 parts by weight of the propylene polymer B; and
10 to 90 parts by weight of the propylene polymer C,
provided that a total amount of the propylene polymer A and the propylene polymer B is 10 to 90 parts by weight (provided that a total of the propylene polymer A, the propylene polymer B, and the propylene polymer C is 100 parts by weight), and
a total of the contained polymers is 70 wt% or more based on a total weight of the propylene resin composition.

[Invention B11]

The propylene resin composition according to any one of Inventions B7 to B10, in which the propylene resin composition contains a recycled propylene polymer as at least one selected from the group consisting of the propylene polymer A, the propylene polymer B, and the propylene polymer C.

[Invention B12]

The propylene resin composition according to any one of Inventions B7 to B11, in which the propylene resin composition contains a virgin propylene polymer as at least one selected from the group consisting of the propylene polymer A, the propylene polymer B, and the propylene polymer C.

[Invention B13]

The propylene resin composition according to any one of Inventions B1 to B12, further containing an ethylene-$\alpha$-olefin copolymer D.

[Invention B14]

The propylene resin composition according to Invention B13, in which the propylene resin composition contains a recycled ethylene-$\alpha$-olefin copolymer as the ethylene-$\alpha$-olefin copolymer D.

[Invention B15]

The propylene resin composition according to any one of Inventions B1 to B14, further containing a filler E.

[Invention B16]

The propylene resin composition according to Invention B15, in which the propylene resin composition contains a recycled filler as the filler E.

[Invention B17]

The propylene resin composition according to Invention B15 or B16, in which the propylene resin composition contains an inorganic filler as the filler E.

[Invention B18]

A molded article containing the propylene resin composition according to any one of Inventions B1 to B17.
Other aspects of the present invention will be described below.

[Invention C1]

A propylene resin composition containing:

20 to 80 parts by weight of a propylene polymer A' having an isotactic pentad fraction of less than 0.981; and
20 to 80 parts by weight of a propylene polymer C having an isotactic pentad fraction of 0.981 or more (provided that a total content of the propylene polymers A' and C is 100 parts by weight),
in which the propylene resin composition contains a propylene polymer B having an isotactic pentad fraction of 0.963 or more and less than 0.981 as the propylene polymer A',

a difference between the isotactic pentad fraction of the propylene polymer A' and the isotactic pentad fraction of the propylene polymer C is 0.010 or more,

the propylene polymer C is a heterophasic propylene polymerization material,

a total amount of all the polymers contained in the propylene resin composition is 75 wt% or more based on a total weight of the propylene resin composition, and

a total amount of the propylene polymer A' and the propylene polymer C is 50 wt% or more based on the total weight of the propylene resin composition.

[Invention C2]

The propylene resin composition according to Invention C1, in which an isotactic pentad fraction of a xylene-insoluble component contained in the heterophasic propylene polymerization material is 0.981 or more.

[Invention C3]

The propylene resin composition according to Invention C1 or C2, in which the propylene resin composition contains a recycled propylene polymer as at least one selected from the group consisting of the propylene polymer A' and the propylene polymer C.

[Invention C4]

The propylene resin composition according to any one of Inventions C1 to C3, in which the propylene resin composition contains a virgin propylene polymer as at least one selected from the group consisting of the propylene polymer A' and the propylene polymer C.

[Invention C5]

The propylene resin composition according to any one of Inventions C1 to C4, in which the propylene resin composition contains a propylene polymer A having an isotactic pentad fraction of less than 0.961 as the propylene polymer A'.

[Invention C6]

The propylene resin composition according to any one of Inventions C1 to C5, in which the propylene resin composition contains, as the propylene polymer A':

a propylene polymer A having an isotactic pentad fraction of less than 0.961; and

a propylene polymer B having an isotactic pentad fraction of 0.963 or more and less than 0.981.

[Invention C7]

The propylene resin composition according to Invention C6, in which the propylene resin composition contains a heterophasic propylene polymerization material as the propylene polymer A.

[Invention C8]

The propylene resin composition according to any one of Inventions C1 to C7, in which the propylene resin composition contains a heterophasic propylene polymerization material as the propylene polymer B.

[Invention C9]

The propylene resin composition according to Invention C6 or C7, in which the propylene resin composition contains:

1 to 60 parts by weight of the propylene polymer A;

5 to 89 parts by weight of the propylene polymer B; and

20 to 80 parts by weight of the propylene polymer C,

provided that a total amount of the propylene polymer A and the propylene polymer B is 20 to 80 parts by weight (provided that a total of the propylene polymer A, the propylene polymer B, and the propylene polymer C is 100 parts by weight),

the total amount of all the polymers contained in the propylene resin composition is 75 wt% or more based on the total weight of the propylene resin composition, and

the total amount of the propylene polymer A, the propylene polymer B, and the propylene polymer C is 50 wt% or more based on the total weight of the propylene resin composition.

[Invention C10]

The propylene resin composition according to C6, C7, or C9, in which the propylene resin composition contains a recycled propylene polymer as at least one selected from the group consisting of the propylene polymer A, the propylene polymer B, and the propylene polymer C.

[Invention C11]

The propylene resin composition according to C6, C7, C9, or C10, in which the propylene resin composition contains a virgin propylene polymer as at least one selected from the group consisting of the propylene polymer A, the propylene polymer B, and the propylene polymer C.

[Invention C12]

The propylene resin composition according to any one of Inventions C1 to C11, further containing an ethylene-$\alpha$-olefin copolymer D.

[Invention C13]

The propylene resin composition according to Invention C12, in which the propylene resin composition contains a recycled ethylene-$\alpha$-olefin copolymer as the ethylene-$\alpha$-olefin copolymer D.

[Invention C14]

The propylene resin composition according to Invention C12 or C13, in which the ethylene-$\alpha$-olefin copolymer D is 1 to 40 wt% based on the total weight of the propylene resin composition.

[Invention C15]

The propylene resin composition according to any one of Inventions C1 to C14, further containing a filler E.

[Invention C16]

The propylene resin composition according to Invention C15, in which the propylene resin composition contains a recycled filler as the filler E.

[Invention C17]

The propylene resin composition according to Invention C15 or C16, in which the propylene resin composition contains an inorganic filler as the filler E.

[Invention C18]

A molded article containing the propylene resin composition according to any one of Inventions C1 to C17.
Other aspects of the present invention will be described below.

· The propylene resin composition of the present invention, in which the heterophasic propylene polymerization material is a mixture containing a polymer I containing 80 wt% or more of monomer units derived from propylene (provided that a total weight of the polymer I is 100 wt%), and a polymer II containing monomer units derived from at least one $\alpha$-olefin selected from the group consisting of ethylene and C4-12 $\alpha$-olefins, and monomer units derived from propylene, and

an isotactic pentad fraction of the polymer I is 0.981 or more.

· The propylene resin composition of the present invention, in which the propylene resin composition contains a recycled propylene polymer as at least one of the propylene polymers A' and C, and contains a virgin propylene polymer as the other one.

· The propylene resin composition of the present invention, in which the propylene resin composition contains a recycled propylene polymer as the propylene polymer A, and contains a virgin propylene polymer as the propylene polymer B.

· The propylene resin composition of the present invention, in which the propylene resin composition contains a recycled propylene polymer as the polymer B.

· When at least one of the polymers A', A, B, and C is a recycled propylene polymer, the propylene resin composition may contain a filler or an ethylene-α-olefin copolymer, or a filler and an ethylene-α-olefin copolymer. The filler may be a recycled filler, and the ethylene-α-olefin copolymer may be a recycled ethylene-α-olefin copolymer.

EFFECT OF THE INVENTION

According to the present invention, a molded article having excellent hinge resistance and a propylene resin composition as a raw material thereof can be provided.

MODE FOR CARRYING OUT THE INVENTION

Definition

In the present specification, the term "propylene polymer" means a polymer having 50 wt% or more of monomer units derived from propylene. Details will be described below.

In the present specification, the term "propylene resin composition" means a composition containing a propylene polymer. Details will be described below.

As used in the present specification, the term "α-olefin" means an aliphatic unsaturated hydrocarbon having a carbon-carbon unsaturated double bond at the α-position.

In the present specification, the term "C4-10 hydrocarbon group" means a hydrocarbon group having 4 to 10 carbon atoms. The same applies to other similar expressions.

In the present specification, the term "ethylene-α-olefin copolymer" means a copolymer containing monomer units derived from ethylene and monomer units derived from α-olefins having C4 or more (meaning 4 or more carbon atoms, and the same applies to other similar expressions), and substantially free of monomer units derived from propylene. Details will be described below.

In the present specification, the term "heterophasic propylene polymerization material" means a mixture containing a polymer I containing 80 wt% or more of monomer units derived from propylene (provided that a total weight of the polymer I is 100 wt%), and a polymer II containing monomer units derived from at least one α-olefin selected from the group consisting of ethylene and C4-12 α-olefins and monomer units derived from propylene.

In the present specification, the term "xylene-soluble component (also referred to as "CXS component")" means a solid that is a component soluble in p-xylene contained in a polymer and is obtained by the following method:
a method in which about 2 g of a polymer is dissolved in boiling p-xylene for 2 hours to obtain a solution, then the solution is cooled to 20°C to separate a precipitated solid, and the obtained filtrate is concentrated to obtain a solid.

In the present specification, the term "xylene-insoluble component (also referred to as "CXIS component")" means a component other than the "CXS component" in the polymer. The solid remaining on the filter paper is vacuum-dried by the above method to obtain a CXIS component.

All numbers disclosed in the present specification are approximate values, regardless whether the term "about" or "approximate" is used in connection therewith. The number may vary by 1 percent, 2 percent, 5 percent, or sometimes, 10 to 20 percent. Whenever a numerical range with a lower limit $R^L$ and an upper limit $R^U$ is disclosed, any number falling within the range is specifically disclosed. In particular, the following numbers within the range are specifically disclosed: $R=R^L+k*(R^U-R^L)$ (in the equation, k is a variable ranging from 1 percent to 100 percent with a 1 percent increment, that is, k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent). Moreover, any numerical range defined by two R numbers as defined in the above is also specifically disclosed.

The description of "a lower limit to an upper limit" indicating a numerical range denotes "a lower limit or more and an upper limit or less", and the description of "an upper limit to a lower limit" indicating a numerical range denotes "an upper limit or less and a lower limit or more". That is, these descriptions represent a numerical range including a lower limit and an upper limit, and in one aspect, one or both of the upper limit and the lower limit may be excluded, that is, "the lower limit to the upper limit" may represent "more than the lower limit and the upper limit or less", "the lower limit or more and less than the upper limit", or "more than the lower limit and less than the upper limit". Similarly, "xx or more" may represent "more than xx", and "xx or less" may represent "less than xx".

Hereinafter, some embodiments of the present invention will be described in detail. However, the present invention is not limited to the following embodiments.

Propylene resin composition

A "propylene resin composition (hereinafter, also simply referred to as a resin composition)" of the present invention contains a propylene polymer A' having an isotactic pentad fraction of less than 0.981 and a propylene polymer C having an isotactic pentad fraction of 0.981 or more. By molding such a propylene resin composition, a molded article having excellent hinge resistance can be produced. In addition, when the propylene resin composition of the present invention is used, a molded article can be produced by a simple method such as injection molding generally employed in production of a molded article for an automobile and the like.

From the viewpoint of hinge resistance of the molded article, a difference between the isotactic pentad fraction of the propylene polymer A' and the isotactic pentad fraction of the propylene polymer C is preferably 0.005 or more, and more preferably 0.010 or more, 0.015 or more, or 0.017 or more. Note that, when the propylene resin composition of the present invention contains two or more types of propylene polymers A', the isotactic pentad fraction of the propylene polymer A' having the largest content is used for calculating the "difference". Similarly, when the propylene resin composition of the present invention contains two or more types of propylene polymers C, the isotactic pentad fraction of the propylene polymer C having the largest content is used for calculating the "difference". The same applies to the following "Difference between isotactic pentad fraction of propylene polymer B and isotactic pentad fraction of propylene polymer C".

When the propylene resin composition of the present invention contains a propylene polymer B having an isotactic pentad fraction of 0.963 or more and less than 0.981 as the propylene polymer A', a difference between the isotactic pentad fraction of the propylene polymer B and the isotactic pentad fraction of the propylene polymer C is preferably 0.005 or more, and more preferably 0.010 or more, 0.015 or more, or 0.017 or more.

In one aspect, the propylene resin composition of the present invention contains a propylene polymer A having an isotactic pentad fraction of less than 0.961, a propylene polymer B having an isotactic pentad fraction of 0.961 or more and less than 0.981, and a propylene polymer C having an isotactic pentad fraction of 0.981 or more.

Each component represented by "propylene polymer A'" or the like is also simply referred to as "component A'" or the like.

Hereinafter, each component will be described.

Propylene polymer A'

The component A' is a polymer having 50 wt% or more of monomer units derived from propylene, and the isotactic pentad fraction of the component A' is less than 0.981. Examples of the component A' include a propylene homopolymer, a random copolymer of propylene and a monomer other than propylene, and a heterophasic propylene polymerization material. The propylene resin composition of the present invention may contain only one type of component A' or two or more types of components A'. The component A' preferably contains at least one selected from the group consisting of a propylene homopolymer and a heterophasic propylene polymerization material from the viewpoint of rigidity and impact resistance of the molded article.

When the component A' is a heterophasic propylene polymerization material, the isotactic pentad fraction of the component A' means the isotactic pentad fraction of CXIS of the component A'. Similarly, in other components and raw materials, the isotactic pentad fraction of the heterophasic propylene polymerization material means the isotactic pentad fraction of the CXIS.

The isotactic pentad fraction (also referred to as mmmm fraction) of the component A' is less than 0.981, and may be, for example, 0.980 or less, 0.978 or less, 0.975 or less, less than 0.961, 0.958 or less, 0.955 or less, or 0.950 or less. A lower limit thereof is not particularly limited, and may be, for example, 0.900 or more, 0.925 or more, 0.930 or more, 0.961 or more, 0.965 or more, or 0.968 or more. From the viewpoint of the rigidity and dimensional stability of the molded article containing the present resin composition, it is preferably 0.930 or more.

The isotactic pentad fraction means an isotactic fraction in pentad units. That is, the isotactic pentad fraction indicates a content ratio of a structure in which five monomer units derived from propylene are continuously meso-bonded when viewed in pentad units. Note that, when a target component is a copolymer, it refers to a value measured for a chain of monomer units derived from propylene.

In the present specification, the isotactic pentad fraction refers to a value measured by a $^{13}$C-NMR spectrum. Specifically, a ratio of an area of mmmm peak to an area of a total absorption peak of a methyl carbon region obtained by a $^{13}$C-NMR spectrum is taken as the isotactic pentad fraction. Note that a method for measuring the isotactic pentad fraction by a $^{13}$C-NMR spectrum is described, for example, in Macromolecules, 6,925 (1973) by A. Zambelli et al. However, attribution of an absorption peak obtained by a $^{13}$C-spectrum is based on the description of Macromolecules, 8,687 (1975).

A propylene polymer having a desired isotactic pentad fraction can be produced by appropriately selecting a catalyst, a donor, polymerization conditions, and the like. In addition, a propylene polymer having a desired isotactic pentad fraction can be appropriately obtained from a commercially available product.

Propylene homopolymer

When the present resin composition contains a propylene homopolymer as the component A', a limiting viscosity number ([η]) of the propylene homopolymer is preferably 0.10 to 4.00 dL/g, more preferably 0.50 to 3.00 dL/g, and still more preferably 0.70 to 2.00 dL/g, from the viewpoint of fluidity of the resin composition during melting and the toughness of the molded article.

In the present specification, the limiting viscosity number (unit: dL/g) means a value measured at a temperature of 135°C using tetralin as a solvent by the following method.

A reduced viscosity is measured at three points of concentrations of 0.1 g/dL, 0.2 g/dL, and 0.5 g/dL using an Ubbelohde viscometer. The limiting viscosity number is determined by an extrapolation method in which the reduced viscosity is plotted with respect to the concentration and the concentration is extrapolated to zero. A method for calculating the limiting viscosity number by the extrapolation method is described, for example, in "Polymer solution, Polymer Experiment 11" (published by KYORITSU SHUPPAN CO., LTD., 1982), page 491.

A molecular weight distribution (Mw/Mn) of the propylene homopolymer is preferably 3.0 or more, and more preferably 4.0 or more. The molecular weight distribution of the component A' may be 15.0 or less or 10.0 or less. The molecular weight distribution of the component A' is preferably 3.0 to 15.0, and more preferably 4.0 to 10.0.

In the present specification, the molecular weight distribution means a ratio of a weight average molecular weight (Mw) to a number average molecular weight (Mn) (Mw/Mn), which is calculated using the weight average molecular weight (Mw) and the number average molecular weight (Mn) measured by gel permeation chromatography (GPC) under the following conditions.

Apparatus: HLC-8121 GPC/HT manufactured by Tosoh Corporation
Separation column: three GMHHR-H(S)HT columns manufactured by Tosoh Corporation
Measurement temperature: 140°C
Carrier: orthodichlorobenzene
Flow rate: 1.0 mL/min
Sample concentration: about 1 mg/mL
Sample injection amount: 400 μL
Detector: differential refractometer
Calibration curve creation method: using standard polystyrene

The propylene homopolymer can be produced, for example, by polymerizing propylene using a polymerization catalyst.

Examples of the polymerization catalyst include a Ziegler catalyst; a Ziegler-Natta catalyst; a catalyst containing a compound of a transition metal of Group 4 in the periodic table having a cyclopentadienyl ring and alkylaluminoxane; a catalyst containing a compound of a transition metal of Group 4 in the periodic table having a cyclopentadienyl ring, a compound that reacts with the transition metal compound to form an ionic complex, and an organoaluminum compound; and a modified catalyst formed by supporting catalytic components (a compound of a transition metal of Group 4 in the periodic table having a cyclopentadienyl ring, a compound that forms an ionic complex, an organoaluminum compound, and the like) on inorganic particles (silica, clay minerals, and the like).

Examples of the polymerization catalyst include catalysts described in JP-A-61-218606, JP-A-5-194685, JP-A-7-216017, JP-A-9-316147, JP-A-10-212319, JP-A-2004-182981, JP-A-2010-168545, and JP-A-2011-246699.

In addition, a polymer obtained by prepolymerizing propylene in the presence of the polymerization catalyst can also be used as the polymerization catalyst.

Examples of the polymerization method include bulk polymerization, solution polymerization, and gas phase polymerization. Here, the bulk polymerization method refers to a method of performing polymerization by using a liquid olefin as a medium at a polymerization temperature, and the solution polymerization method refers to a method of performing polymerization in an inert hydrocarbon solvent such as propane, butane, isobutane, pentane, hexane, heptane, or octane. In addition, the gas phase polymerization method refers to a method in which a gaseous monomer is used as a medium and a gaseous monomer is polymerized in the medium.

Examples of the polymerization manner include a batch manner, a continuous manner, and a combination thereof. The polymerization manner may be a multistage manner in which a plurality of polymerization reaction tanks are connected in series.

From the viewpoint of excellent industrial and cost-effectiveness, a continuous gas phase polymerization method or a bulk gas phase polymerization method in which a bulk polymerization method and a gas phase polymerization method are continuously performed is preferable.

Various conditions (polymerization conditions such as a polymerization temperature, a polymerization pressure, a monomer concentration, a catalyst loading amount, and a polymerization time) in the polymerization step may be appropriately determined according to the molecular structure of the target polymer.

Other steps may be performed before or after the polymerization step. For example, after the polymerization step, the polymer may be dried at a temperature equal to or lower than a temperature at which the polymer melts as necessary in order to remove a residual solvent contained in the polymer, an ultra-low molecular weight oligomer by-produced during production, and the like. Examples of the drying method include methods described in JP-A-55-75410, JP 2565753, and the like.

Random copolymer of propylene and monomer other than propylene

The random copolymer of propylene and a monomer other than propylene contains monomer units derived from propylene and monomer units derived from a monomer other than propylene. When the present resin composition contains the random copolymer as the component A', the random copolymer preferably contains 0.01 to 20 wt% of monomer units derived from a monomer other than propylene based on the weight of the random copolymer.

Examples of the monomer other than propylene include ethylene and C4-12 $\alpha$-olefins. Among them, at least one selected from the group consisting of ethylene and C4-10 $\alpha$-olefins is preferable, at least one selected from the group consisting of ethylene, 1-butene, 1-hexene, and 1-octene is more preferable, and at least one selected from the group consisting of ethylene and 1-butene is still more preferable.

Examples of the random copolymer include a propylene-ethylene random copolymer, a propylene-1-butene random copolymer, a propylene-1-hexene random copolymer, a propylene-1-octene random copolymer, a propylene-ethylene-1-butene random copolymer, a propylene-ethylene-1-hexene random copolymer, and a propylene-ethylene-1-octene random copolymer.

When the present resin composition contains a random copolymer of propylene and a monomer other than propylene as the component A', a limiting viscosity number ($[\eta]$) of the random copolymer is preferably 0.10 to 4.00 dL/g, more preferably 0.50 to 3.00 dL/g, and still more preferably 0.70 to 2.00 dL/g, from the viewpoint of fluidity of the resin composition during melting.

A molecular weight distribution (Mw/Mn) of the random polymer is preferably 3.0 or more, and more preferably 4.0 or more. The molecular weight distribution of the random polymer may be 10.0 or less or 7.0 or less. The molecular weight distribution of the random polymer is preferably 3.0 to 10.0, and more preferably 4.0 to 7.0.

The random copolymer can be produced, for example, by polymerizing propylene and a monomer other than propylene according to a polymerization catalyst, a polymerization method, a polymerization manner, and polymerization conditions that can be used in the production of the propylene homopolymer.

Heterophasic propylene polymerization material

When the present resin composition contains a heterophasic propylene polymerization material as the component A', the heterophasic propylene polymerization material can be produced, for example, by performing a first polymerization step of forming a polymer I and a second polymerization step of forming a polymer II. These polymerization steps can be performed according to a polymerization catalyst, a polymerization method, a polymerization manner, and polymerization conditions that can be used in the production of the propylene homopolymer.

In the heterophasic propylene polymerization material, when the total weight of the heterophasic propylene polymerization material is 100 wt%, a total of the polymer I and the polymer II contained in the heterophasic propylene polymerization material may be 100 wt%.

As described above, the polymer I contains 80 wt% or more of monomer units derived from propylene (provided that the total weight of the polymer I is 100 wt%). The polymer I may be, for example, a propylene homopolymer or may contain monomer units derived from a monomer other than propylene. When the polymer I contains monomer units derived from a monomer other than propylene, a content thereof may be, for example, 0.01 wt% or more and less than 20 wt% based on the total weight of the polymer I.

Examples of the monomer other than propylene include ethylene and C4 or higher $\alpha$-olefins. Among them, at least one selected from the group consisting of ethylene and C4-10 $\alpha$-olefins is preferable, at least one selected from the group consisting of ethylene, 1-butene, 1-hexene, and 1-octene is more preferable, and at least one selected from the group consisting of ethylene and 1-butene is still more preferable.

Examples of the copolymer containing monomer units derived from a monomer other than propylene include a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

From the viewpoint of the dimensional stability of the molded article, the polymer I is preferably a propylene homopolymer, a propylene-ethylene copolymer, a propylene-1-butene copolymer, or a propylene-ethylene-1-butene copolymer, and more preferably a propylene homopolymer.

Preferably, the isotactic pentad fraction of the polymer I is less than 0.981, and may be, for example, 0.980 or less, 0.978 or less, 0.975 or less, less than 0.961, or 0.950 or less. A lower limit thereof is not particularly limited, and may be, for example, 0.900 or more, 0.925 or more, 0.930 or more, 0.961 or more, 0.965 or more, or 0.968 or more.

A content of the polymer I is preferably 50 to 99 wt%, and more preferably 60 to 95 wt%, based on the total weight of the heterophasic propylene polymerization material.

As described above, the polymer II contains monomer units derived from at least one $\alpha$-olefin selected from the group consisting of ethylene and C4-12 $\alpha$-olefins and monomer units derived from propylene. Preferably, the polymer II contains 30 wt% or more of monomer units derived from at least one $\alpha$-olefin selected from the group consisting of ethylene and C4-12 $\alpha$-olefins, and contains monomer units derived from propylene (provided that the total weight of the polymer II is 100 wt%).

In the polymer II, a content of the monomer units derived from at least one $\alpha$-olefin selected from the group consisting of ethylene and C4-12 $\alpha$-olefins may be 30 to 70 wt% or 35 to 60 wt% (provided that the total weight of the polymer II is 100 wt%).

In the polymer II, the at least one $\alpha$-olefin selected from the group consisting of ethylene and C4-12 $\alpha$-olefins is preferably at least one selected from the group consisting of ethylene and C4-10 $\alpha$-olefins, more preferably at least one selected from the group consisting of ethylene, 1-butene, 1-hexene, 1-octene, and 1-decene, and still more preferably at least one selected from the group consisting of ethylene and 1-butene.

Examples of the polymer II include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. Among them, a propylene-ethylene copolymer, a propylene-1-butene copolymer, and a propylene-ethylene-1-butene copolymer are preferable, and a propylene-ethylene copolymer is more preferable.

A content of the polymer II is preferably 1 to 50 wt%, and more preferably 5 to 40 wt%, based on the total weight of the heterophasic propylene polymerization material.

In the heterophasic propylene polymerization material, a content of the monomer units derived from at least one $\alpha$-olefin selected from the group consisting of ethylene and C4-12 $\alpha$-olefins may be 0.3 to 35 wt% or 0.7 to 24 wt% (provided that the total weight of the heterophasic propylene polymerization material is 100 wt%).

A content of the xylene-insoluble component (CXIS component) in the heterophasic propylene polymerization material is preferably 50 to 99 wt%, more preferably 60 to 95 wt%, based on the total weight of the heterophasic propylene polymerization material.

A content of the xylene-soluble component (CXS component) in the heterophasic propylene polymerization material is preferably 1 to 50 wt%, more preferably 5 to 40 wt%, based on the total weight of the heterophasic propylene polymerization material.

Preferably, the isotactic pentad fraction of CXIS of the heterophasic propylene polymerization material is less than 0.981, and may be, for example, 0.980 or less, 0.978 or less, 0.975 or less, less than 0.961, 0.958 or less, 0.955 or less, or 0.950 or less. A lower limit thereof is not particularly limited, and may be, for example, 0.900 or more, 0.925 or more, 0.930 or more, 0.961 or more, 0.965 or more, or 0.968 or more.

In the present invention, it is considered that the CXIS component in the heterophasic propylene polymerization material is mainly composed of the polymer I, and the CXS component in the heterophasic propylene polymerization material is mainly composed of the polymer II.

Examples of the heterophasic propylene polymerization material include a (propylene)-(propylene-ethylene) polymerization material, a (propylene)-(propylene-ethylene-1-butene) polymerization material, a (propylene)-(propylene-ethylene-1-hexene) polymerization material, a (propylene)-(propylene-ethylene-1-octene) polymerization material, a (propylene)-(propylene-1-butene) polymerization material, a (propylene)-(propylene-1-hexene) polymerization material, a (propylene)-(propylene-1-octene) polymerization material, a (propylene)-(propylene-1-decene) polymerization material, a (propylene-ethylene)-(propylene-ethylene) polymerization material, a (propylene-ethylene)-(propylene-ethylene-1-butene) polymerization material, a (propylene-ethylene)-(propylene-ethylene-1-hexene) polymerization material, a (propylene-ethylene)-(propylene-ethylene-1-octene) polymerization material, a (propylene-ethylene)-(propylene-ethylene-1-decene) polymerization material, a (propylene-ethylene)-(propylene-1-butene) polymerization material, a (propylene-ethylene)-(propylene-1-hexene) polymerization material, a (propylene-ethylene)-(propylene-1-octene) polymerization material, a (propylene-ethylene)-(propylene-1-decene) polymerization material, a (propylene-1-butene)-(propylene-ethylene) polymerization material, a (propylene-1-butene)-(propylene-ethylene-1-butene) polymerization material, a (propylene-1-butene)-(propylene-ethylene-1-hexene) polymerization material, a (propylene-1-butene)-(propylene-ethylene-1-octene) polymerization material, a (propylene-1-butene)-(propylene-ethylene-1-decene) polymerization material, a (propylene-1-butene)-(propylene-1-butene) polymerization material, a (propylene-1-butene)-(propylene-1-hexene) polymerization material, a (propylene-1-butene)-(propylene-1-octene) polymerization material, a (propylene-1-butene)-(propylene-1-decene) polymerization material, a (propylene-1-hexene)-(propylene-1-hexene) polymerization material, a (propylene-1-hexene)-(propylene-1-octene) polymerization material, a (propylene-1-hexene)-(propylene-1-decene) polymerization material, a (propylene-1-octene)-(propylene-1-octene) polymerization material, and a (propylene-1-octene)-(propylene-1-decene) polymerization material.

Here, the description of the "(Propylene)-(propylene-ethylene) polymerization material" means "Heterophasic propylene polymerization material in which polymer I is propylene homopolymer and polymer II is propylene-ethylene copolymer". The same applies to other similar expressions.

As the heterophasic propylene polymerization material, a (propylene)-(propylene-ethylene) polymerization material, a (propylene)-(propylene-ethylene-1-butene) polymerization material, a (propylene-ethylene)-(propylene-ethylene) polymerization material, a (propylene-ethylene)-(propylene-ethylene-1-butene) polymerization material, or a (propylene-1-butene)-(propylene-1-butene) polymerization material is preferable, and a (propylene)-(propylene-ethylene) polymerization material is more preferable.

A limiting viscosity number of the polymer I ($[\eta]$I) is preferably 0.10 to 4.00 dL/g, more preferably 0.50 to 3.00 dL/g, and still more preferably 0.70 to 2.00 dL/g.

A limiting viscosity number of the polymer II ($[\eta]$II) is preferably 1.00 to 10.00 dL/g, more preferably 2.00 to 10.00 dL/g, and still more preferably 2.00 to 9.00 dL/g.

In addition, a ratio of the limiting viscosity number of the polymer II ($[\eta]$II) to the limiting viscosity number of the polymer I ($[\eta]$I) ($[\eta]$II/$[\eta]$I) is preferably 1 to 20, and more preferably 1 to 10.

Examples of a method for measuring the limiting viscosity number of the polymer I ($[\eta]$I) include a method in which the polymer I formed from a reactor that forms the polymer I is extracted, and a limiting viscosity number of the polymer is measured.

The limiting viscosity number of the polymer II ($[\eta]$II) can be calculated by the following equation (6) using, for example, the limiting viscosity number of the heterophasic propylene polymerization material ($[\eta]$Total), the limiting viscosity number of the polymer I ($[\eta]$I), and the contents of the polymer II and the polymer I.

$$[\eta]II=([\eta]Total-[\eta]I \times XI)/XII \cdots (6)$$

$[\eta]$Total: limiting viscosity number (dL/g) of heterophasic propylene polymerization material
$[\eta]$I: limiting viscosity number (dL/g) of polymer I
XI: ratio of weight of polymer I to total weight of heterophasic propylene polymerization material (weight of polymer I/weight of heterophasic propylene polymerization material)
XII: ratio of weight of polymer I to total weight of heterophasic propylene polymerization material (weight of polymer II/weight of heterophasic propylene polymerization material)

Here, XI and XII can be determined from a mass balance during polymerization.

Note that XII may be calculated by measuring the heat of fusion of the polymer I and the heat of fusion of the heterophasic propylene polymerization material and using the following equation.

$$XII=1-(\Delta Hf)T/(\Delta Hf)P$$

$(\Delta Hf)$T: heat of fusion (J/g) of heterophasic propylene polymerization material
$(\Delta Hf)$P: heat of fusion (J/g) of polymer I

A limiting viscosity number ($[\eta]$CXIS) of the CXIS component is preferably 0.10 to 4.00 dL/g, more preferably 0.50 to 3.00 dL/g, and still more preferably 0.70 to 2.00 dL/g.

A limiting viscosity number ($[\eta]$CXS) of the CXS component is preferably 1.00 to 10.00 dL/g, more preferably 2.00 to 10.00 dL/g, and still more preferably 2.00 to 9.00 dL/g.

A ratio of the limiting viscosity number ($[\eta]$CXS) of the CXS component to the limiting viscosity number ($[\eta]$CXIS) of the CXIS component ($[\eta]$CXS/$[\eta]$CXIS) is preferably 1 to 20, and more preferably 1 to 10.

A molecular weight distribution ($Mw(I)/Mn(I)$) of the polymer I is preferably 3.0 or more, and more preferably 4.0 or more.

A molecular weight distribution ($Mw(CXIS)/Mn(CXIS)$) of the CXIS component is preferably 3.0 or more, and more preferably 4.0 or more.

A melt flow rate of the component A' at a temperature of 230°C and a load of 2.16 kgf is preferably 0.1 g/10 min or more and more preferably 1 to 300 g/10 min from the viewpoint of molding processability of the resin composition. The melt flow rate may be 5 g/10 min or more or 10 to 300 g/10 min.

In the present specification, the melt flow rate refers to a value measured in accordance with JIS K7210. In addition, the melt flow rate may be hereinafter referred to as MFR. The measurement temperature of the MFR of each of the component A', the component A, the component B, the component C, and the propylene resin composition is 230°C.

In one aspect, the present resin composition contains a virgin propylene polymer as the component A'.

In the present specification, the term "virgin propylene polymer" means a propylene polymer that is not molded in a product such as an automobile or a part thereof after production of the propylene polymer by a process including a polymerization step, and is not used for any end use, unlike "Recycled propylene polymer" described below. The same applies to other "virgin xxx".

In one aspect, the present resin composition contains a recycled propylene polymer as the component A'.

In one aspect, the recycled propylene polymer may include a filler or an ethylene-α-olefin copolymer, or a filler and an ethylene-α-olefin copolymer.

In the present specification, the term "recycled propylene polymer" means a propylene polymer that is reused after being subjected to processing such as molding once or after being used for some end use and then subjected to a recovery step. The same applies to other "recycled xxx".

Examples of the raw material used in the recovery step include interior parts of automobiles (instrument panels, door trims, and the like), exterior parts of automobiles (bumpers and the like), other automobile parts (battery cases and the like), packaging containers (food retort pouches, refilling pouches, detergent bottles, and the like), housings of household electrical appliances, office supplies (trays and the like), and household daily necessities (contact lens cases and the like). These recovered raw materials may contain an elastomer component that enhances impact resistance such as an ethylene-α-olefin copolymer or an additive such as a filler, for example, an inorganic filler, a neutralizing agent, an antioxidant, an ultraviolet absorber, a nucleating agent, a lubricant, an antistatic agent, an antiblocking agent, a coloring agent (an inorganic pigment, an organic pigment, a pigment dispersant, and the like), or a flame retardant depending on the application. The recovery process is not particularly limited, and examples thereof include known methods.

In one aspect, a process of preparing the recycled propylene polymer may include an arbitrary step other than the recovery step, for example, a crushing step, a purification step, a melting step, a kneading step with another substance, and a molding step into a pellet form. Examples of the purification step include washing with water and an aqueous and/or oily agent, microbial treatment, magnetic sorting, and specific gravity sorting. Examples of the molded article include, but are not limited to, injection molded bodies.

Propylene polymer A

The present resin composition may contain a propylene polymer A (component A) as the component A'.

The component A is a polymer having 50 wt% or more of monomer units derived from propylene, and the isotactic pentad fraction of the component A is less than 0.961. Examples of the component A include a propylene homopolymer, a random copolymer of propylene and a monomer other than propylene, and a heterophasic propylene polymerization material. When the propylene resin composition of the present invention contains the component A, only one type of the component A may be contained, or two or more types thereof may be contained. The component A preferably contains at least one selected from the group consisting of a propylene homopolymer and a heterophasic propylene polymerization material from the viewpoint of rigidity and impact resistance of the molded article.

The isotactic pentad fraction of the component A is less than 0.961, and may be, for example, 0.958 or less, 0.955 or less, or 0.950 or less. A lower limit thereof is not particularly limited, and may be, for example, 0.900 or more or 0.925 or more. From the viewpoint of the rigidity and dimensional stability of the molded article containing the present resin composition, it is preferably 0.930 or more.

A propylene polymer having a desired isotactic pentad fraction can be produced by appropriately selecting a catalyst, a donor, polymerization conditions, and the like. Examples of the polymerization method include methods described in JP-A-2010-168545, JP-A-2011-246699, and the like. In addition, a propylene polymer having a desired isotactic pentad fraction can be appropriately obtained from a commercially available product.

Propylene homopolymer

When the present resin composition contains a propylene homopolymer as the component A, a limiting viscosity number ($[\eta]$) of the propylene homopolymer is preferably 0.10 to 4.00 dL/g, more preferably 0.50 to 3.00 dL/g, and still more preferably 0.70 to 2.00 dL/g, from the viewpoint of fluidity of the resin composition during melting and the toughness of the molded article.

A molecular weight distribution (Mw/Mn) of the propylene homopolymer is preferably 3.0 or more, and more preferably 4.0 or more. The molecular weight distribution of the component A may be 30.0 or less or 25.0 or less. The molecular weight distribution of the component A is preferably 3.0 to 30.0, and more preferably 4.0 to 25.0.

The propylene homopolymer as the component A can be produced, for example, by polymerizing propylene according to a polymerization catalyst, a polymerization method, a polymerization manner, and polymerization conditions that can be used in the production of the propylene homopolymer as the component A'.

Random copolymer of propylene and monomer other than propylene

The random copolymer of propylene and a monomer other than propylene contains monomer units derived from propylene and monomer units derived from a monomer other than propylene. When the present resin composition contains the random copolymer as the component A, the random copolymer preferably contains 0.01 to 20 wt% of monomer units derived from a monomer other than propylene based on the weight of the random copolymer.

Examples of the monomer other than propylene include ethylene and C4-12 $\alpha$-olefins. Among them, at least one selected from the group consisting of ethylene and C4-10 $\alpha$-olefins is preferable, at least one selected from the group consisting of ethylene, 1-butene, 1-hexene, and 1-octene is more preferable, and at least one selected from the group consisting of ethylene and 1-butene is still more preferable.

Examples of the random copolymer include a propylene-ethylene random copolymer, a propylene-1-butene random copolymer, a propylene-1-hexene random copolymer, a propylene-1-octene random copolymer, a propylene-ethylene-1-butene random copolymer, a propylene-ethylene-1-hexene random copolymer, and a propylene-ethylene-1-octene random copolymer.

When the present resin composition contains a random copolymer of propylene and a monomer other than propylene as the component A, a limiting viscosity number ([η]) of the random copolymer is preferably 0.10 to 4.00 dL/g, more preferably 0.50 to 3.00 dL/g, and still more preferably 0.70 to 2.00 dL/g, from the viewpoint of fluidity of the resin composition during melting.

A molecular weight distribution (Mw/Mn) of the random polymer is preferably 3.0 or more, and more preferably 4.0 or more. The molecular weight distribution of the random polymer may be 10.0 or less or 7.0 or less. The molecular weight distribution of the random polymer is preferably 3.0 to 10.0, and more preferably 4.0 to 7.0.

The random copolymer can be produced, for example, by polymerizing propylene and a monomer other than propylene according to a polymerization catalyst, a polymerization method, a polymerization manner, and polymerization conditions that can be used in the production of the propylene homopolymer.

Heterophasic propylene polymerization material

When the present resin composition contains a heterophasic propylene polymerization material as the component A, the heterophasic propylene polymerization material can be produced, for example, by performing a first polymerization step of forming a polymer I and a second polymerization step of forming a polymer II. These polymerization steps can be performed according to a polymerization catalyst, a polymerization method, a polymerization manner, and polymerization conditions that can be used in the production of the propylene homopolymer.

In the heterophasic propylene polymerization material, when the total weight of the heterophasic propylene polymerization material is 100 wt%, a total of the polymer I and the polymer II contained in the heterophasic propylene polymerization material may be 100 wt%.

As described above, the polymer I contains 80 wt% or more of monomer units derived from propylene (provided that the total weight of the polymer I is 100 wt%). The polymer I may be, for example, a propylene homopolymer or may contain monomer units derived from a monomer other than propylene. When the polymer I contains monomer units derived from a monomer other than propylene, a content thereof may be, for example, 0.01 wt% or more and less than 20 wt% based on the total weight of the polymer I.

Examples of the monomer other than propylene include ethylene and C4 or higher $\alpha$-olefins. Among them, at least one selected from the group consisting of ethylene and C4-10 $\alpha$-olefins is preferable, at least one selected from the group consisting of ethylene, 1-butene, 1-hexene, and 1-octene is more preferable, and at least one selected from the group consisting of ethylene and 1-butene is still more preferable.

Examples of the copolymer containing monomer units derived from a monomer other than propylene include a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

From the viewpoint of the dimensional stability of the molded article, the polymer I is preferably a propylene homopolymer, a propylene-ethylene copolymer, a propylene-1-butene copolymer, or a propylene-ethylene-1-butene copolymer, and more preferably a propylene homopolymer.

Preferably, the isotactic pentad fraction of the polymer I is less than 0.961, and may be, for example, 0.958 or less, 0.955 or less, or 0.950 or less. A lower limit thereof is not particularly limited, and may be, for example, 0.900 or more, 0.925 or more, or 0.930 or more.

A content of the polymer I is preferably 50 to 99 wt%, and more preferably 60 to 95 wt%, based on the total weight of the heterophasic propylene polymerization material.

As described above, the polymer II contains monomer units derived from at least one α-olefin selected from the group consisting of ethylene and C4-12 α-olefins and monomer units derived from propylene. Preferably, the polymer II contains 30 wt% or more of monomer units derived from at least one α-olefin selected from the group consisting of ethylene and C4-12 α-olefins, and contains monomer units derived from propylene (provided that the total weight of the polymer II is 100 wt%).

In the polymer II, a content of the monomer units derived from at least one α-olefin selected from the group consisting of ethylene and C4-12 α-olefins may be 30 to 70 wt% or 35 to 60 wt% (provided that the total weight of the polymer II is 100 wt%).

In the polymer II, the at least one α-olefin selected from the group consisting of ethylene and C4-12 α-olefins is preferably at least one selected from the group consisting of ethylene and C4-10 α-olefins, more preferably at least one selected from the group consisting of ethylene, 1-butene, 1-hexene, 1-octene, and 1-decene, and still more preferably at least one selected from the group consisting of ethylene and 1-butene.

Examples of the polymer II include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. Among them, a propylene-ethylene copolymer, a propylene-1-butene copolymer, and a propylene-ethylene-1-butene copolymer are preferable, and a propylene-ethylene copolymer is more preferable.

A content of the polymer II is preferably 1 to 50 wt%, and more preferably 5 to 40 wt%, based on the total weight of the heterophasic propylene polymerization material.

In the heterophasic propylene polymerization material, a content of the monomer units derived from at least one α-olefin selected from the group consisting of ethylene and C4-12 α-olefins may be 0.3 to 35 wt% or 0.7 to 24 wt% (provided that the total weight of the heterophasic propylene polymerization material is 100 wt%).

A content of the xylene-insoluble component (CXIS component) in the heterophasic propylene polymerization material is preferably 50 to 99 wt%, more preferably 60 to 95 wt%, based on the total weight of the heterophasic propylene polymerization material.

A content of the xylene-soluble component (CXS component) in the heterophasic propylene polymerization material is preferably 1 to 50 wt%, more preferably 5 to 40 wt%, based on the total weight of the heterophasic propylene polymerization material.

Preferably, the isotactic pentad fraction of CXIS of the heterophasic propylene polymerization material is less than 0.961, and may be, for example, 0.958 or less, 0.955 or less, or 0.950 or less. A lower limit thereof is not particularly limited, and may be, for example, 0.900 or more, 0.925 or more, or 0.930 or more. That is, the propylene resin composition may contain a heterophasic propylene polymerization material as the propylene polymer A, and an isotactic pentad fraction of a xylene-insoluble component (CXIS) contained in the heterophasic propylene polymerization material may be less than 0.961, or may be in each of the above numerical ranges.

In the present invention, it is considered that the CXIS component in the heterophasic propylene polymerization material is mainly composed of the polymer I, and the CXS component in the heterophasic propylene polymerization material is mainly composed of the polymer II.

Examples of the heterophasic propylene polymerization material include a (propylene)-(propylene-ethylene) polymerization material, a (propylene)-(propylene-ethylene-1-butene) polymerization material, a (propylene)-(propylene-ethylene-1-hexene) polymerization material, a (propylene)-(propylene-ethylene-1-octene) polymerization material, a (propylene)-(propylene-1-butene) polymerization material, a (propylene)-(propylene-1-hexene) polymerization material, a (propylene)-(propylene-1-octene) polymerization material, a (propylene)-(propylene-1-decene) polymerization material, a (propylene-ethylene)-(propylene-ethylene) polymerization material, a (propylene-ethylene)-(propylene-ethylene-1-butene) polymerization material, a (propylene-ethylene)-(propylene-ethylene-1-hexene) polymerization material, a (propylene-ethylene)-(propylene-ethylene-1-octene) polymerization material, a (propylene-ethylene)-(propylene-ethylene-1-decene) polymerization material, a (propylene-ethylene)-(propylene-1-butene) polymerization material, a (propylene-ethylene)-(propylene-1-hexene) polymerization material, a (propylene-ethylene)-(propylene-1-octene) polymerization material, a (propylene-ethylene)-(propylene-1-decene) polymerization material, a (propylene-1-butene)-(propylene-ethylene) polymerization material, a (propylene-1-butene)-(propylene-ethylene-1-butene) polymerization material, a (propylene-1-butene)-(propylene-ethylene-1-hexene) polymerization material, a (propylene-1-butene)-(propylene-ethylene-1-octene) polymerization material, a (propylene-1-butene)-(propylene-ethylene-1-decene) polymerization material, a (propylene-1-butene)-(propylene-1-butene) polymerization material, a (propylene-1-butene)-(propylene-1-hexene) polymerization material, a (propylene-1-butene)-(propylene-1-octene) polymerization material, a (propylene-1-butene)-(propylene-1-decene) polymerization material, a (propylene-1-hexene)-(propylene-1-hexene) polymerization material, a (propylene-1-hexene)-(propylene-1-octene) polymerization material, a (propylene-1-hexene)-(propylene-1-decene) polymerization material, a (propylene-1-octene)-(propylene-1-octene) polymerization material, and a (propylene-1-octene)-(propylene-1-decene) polymerization material.

Here, the description of the "(Propylene)-(propylene-ethylene) polymerization material" means "Heterophasic propylene polymerization material in which polymer I is propylene homopolymer and polymer II is propylene-ethylene copolymer". The same applies to other similar expressions.

As the heterophasic propylene polymerization material, a (propylene)-(propylene-ethylene) polymerization material, a (propylene)-(propylene-ethylene-1-butene) polymerization material, a (propylene-ethylene)-(propylene-ethylene) polymerization material, a (propylene-ethylene)-(propylene-ethylene-1-butene) polymerization material, or a (propylene-1-butene)-(propylene-1-butene) polymerization material is preferable, and a (propylene)-(propylene-ethylene) polymerization material is more preferable.

A limiting viscosity number of the polymer I ([η]I) is preferably 0.10 to 4.00 dL/g, more preferably 0.50 to 3.00 dL/g, and still more preferably 0.70 to 2.00 dL/g.

A limiting viscosity number of the polymer II ([η]II) is preferably 1.00 to 10.00 dL/g, more preferably 2.00 to 10.00 dL/g, and still more preferably 2.00 to 9.00 dL/g.

In addition, a ratio of the limiting viscosity number of the polymer II ([η]II) to the limiting viscosity number of the polymer I ([η]I) ([η]II/[η]I) is preferably 1 to 20, and more preferably 1 to 10.

The limiting viscosity number ([η]I) of the polymer I can be measured, for example, by the method described above for the polymer I of the heterophasic propylene polymerization material as the component A'.

The limiting viscosity number ([η]II) of the polymer II can be measured, for example, by the method described above for the polymer I of the heterophasic propylene polymerization material as the component A'.

A limiting viscosity number ([η]CXIS) of the CXIS component is preferably 0.10 to 4.00 dL/g, more preferably 0.50 to 3.00 dL/g, and still more preferably 0.70 to 2.00 dL/g.

A limiting viscosity number ([η]CXS) of the CXS component is preferably 1.00 to 10.00 dL/g, more preferably 2.00 to 10.00 dL/g, and still more preferably 2.00 to 9.00 dL/g.

A ratio of the limiting viscosity number ([η]CXS) of the CXS component to the limiting viscosity number ([η]CXIS) of the CXIS component ([η]CXS/[η]CXIS) is preferably 1 to 20, and more preferably 1 to 10.

A molecular weight distribution (Mw(I)/Mn(I)) of the polymer I is preferably 3.0 or more, and more preferably 4.0 or more.

A molecular weight distribution (Mw(CXIS)/Mn(CXIS)) of the CXIS component is preferably 3.0 or more, and more preferably 4.0 or more.

A melt flow rate of the component A at a temperature of 230°C and a load of 2.16 kgf is preferably 0.1 g/10 min or more and more preferably 1 to 300 g/10 min from the viewpoint of molding processability of the resin composition.

The present resin composition may contain a recycled propylene polymer A', and may contain a virgin propylene polymer A', as the component A'.

Propylene polymer B

From the viewpoint of hinge resistance of the molded article, the present resin composition preferably contains a propylene polymer B (component B) as the component A'.

The component B is a polymer having 50 wt% or more of monomer units derived from propylene, and the isotactic pentad fraction of the component B is 0.961 or more and less than 0.981. Examples of the component B include a propylene homopolymer, a random copolymer of propylene and a monomer other than propylene, and a heterophasic propylene polymerization material. When the propylene resin composition of the present invention contains the component B, only one type of the component B may be contained, or two or more types thereof may be contained. The component B preferably contains at least one selected from the group consisting of a propylene homopolymer and a heterophasic propylene polymerization material from the viewpoint of rigidity and impact resistance of the molded article.

From the viewpoint of hinge resistance of the molded article, the isotactic pentad fraction of the component B is preferably 0.963 or more, 0.965 or more, or 0.968 or more. An upper limit thereof is less than 0.981, and may be, for example, 0.980 or less, 0.978 or less, or 0.975 or less.

Propylene homopolymer

When the present resin composition contains a propylene homopolymer as the component B, a limiting viscosity number ([η]) of the propylene homopolymer is preferably 0.10 to 4.00 dL/g, more preferably 0.50 to 3.00 dL/g, and still more preferably 0.70 to 2.00 dL/g, from the viewpoint of fluidity of the resin composition during melting and the toughness of the molded article.

A molecular weight distribution (Mw/Mn) of the propylene homopolymer is preferably 3.0 or more, and more preferably 4.0 or more. The molecular weight distribution of the component B may be 15.0 or less or 10.0 or less. The molecular weight distribution of the component B is preferably 3.0 to 15.0, and more preferably 4.0 to 10.0.

The propylene homopolymer as the component B can be produced, for example, by polymerizing propylene according to a polymerization catalyst, a polymerization method, a polymerization manner, and polymerization conditions that can be used in the production of the propylene homopolymer as the component A.

Random copolymer of propylene and monomer other than propylene

The random copolymer of propylene and a monomer other than propylene contains monomer units derived from propylene and monomer units derived from a monomer other than propylene. When the present resin composition contains the random copolymer as the component B, the random copolymer preferably contains 0.01 to 20 wt% of monomer units derived from a monomer other than propylene based on the weight of the random copolymer.

Examples of the monomer other than propylene include ethylene and C4-12 $\alpha$-olefins. Among them, at least one selected from the group consisting of ethylene and C4-10 $\alpha$-olefins is preferable, at least one selected from the group consisting of ethylene, 1-butene, 1-hexene, and 1-octene is more preferable, and at least one selected from the group consisting of ethylene and 1-butene is still more preferable.

Examples of the random copolymer include a propylene-ethylene random copolymer, a propylene-1-butene random copolymer, a propylene-1-hexene random copolymer, a propylene-1-octene random copolymer, a propylene-ethylene-1-butene random copolymer, a propylene-ethylene-1-hexene random copolymer, and a propylene-ethylene-1-octene random copolymer.

When the present resin composition contains the random copolymer as the component B, a limiting viscosity number ($[\eta]$) of the random copolymer is preferably 0.10 to 4.00 dL/g, more preferably 0.50 to 3.00 dL/g, and still more preferably 0.70 to 2.00 dL/g, from the viewpoint of fluidity of the resin composition during melting.

A molecular weight distribution (Mw/Mn) of the random polymer is preferably 3.0 or more, and more preferably 4.0 or more. The molecular weight distribution of the random polymer may be 10.0 or less or 7.0 or less. The molecular weight distribution of the random polymer is preferably 3.0 to 10.0, and more preferably 4.0 to 7.0.

The random copolymer can be produced, for example, by polymerizing propylene and a monomer other than propylene according to a polymerization catalyst, a polymerization method, a polymerization manner, and polymerization conditions that can be used in the production of the propylene homopolymer.

Heterophasic propylene polymerization material

When the present resin composition contains a heterophasic propylene polymerization material as the component B, the heterophasic propylene polymerization material can be produced, for example, by performing a first polymerization step of forming a polymer I and a second polymerization step of forming a polymer II. These polymerization steps can be performed according to a polymerization catalyst, a polymerization method, a polymerization manner, and polymerization conditions that can be used in the production of the propylene homopolymer.

In the heterophasic propylene polymerization material, when the total weight of the heterophasic propylene polymerization material is 100 wt%, a total of the polymer I and the polymer II contained in the heterophasic propylene polymerization material may be 100 wt%.

As described above, the polymer I contains 80 wt% or more of monomer units derived from propylene. The polymer I may be, for example, a propylene homopolymer or may contain monomer units derived from a monomer other than propylene. When the polymer I contains monomer units derived from a monomer other than propylene, a content thereof may be, for example, 0.01 wt% or more and less than 20 wt% based on the total weight of the polymer I.

Examples of the monomer other than propylene include ethylene and C4 or higher $\alpha$-olefins. Among them, at least one selected from the group consisting of ethylene and C4-10 $\alpha$-olefins is preferable, at least one selected from the group consisting of ethylene, 1-butene, 1-hexene, and 1-octene is more preferable, and at least one selected from the group consisting of ethylene and 1-butene is still more preferable.

Examples of the copolymer containing monomer units derived from a monomer other than propylene include a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

From the viewpoint of the dimensional stability of the molded article, the polymer I is preferably a propylene homopolymer, a propylene-ethylene copolymer, a propylene-1-butene copolymer, or a propylene-ethylene-1-butene copolymer, and more preferably a propylene homopolymer.

Preferably, the isotactic pentad fraction of the polymer I is 0.961 or more, and may be, for example, 0.963 or more, 0.965 or more, or 0.968 or more. An upper limit thereof is preferably less than 0.981, and may be, for example, 0.980 or less, 0.978 or less, or 0.975 or less.

A content of the polymer I is preferably 50 to 99 wt%, and more preferably 60 to 95 wt%, based on the total weight of the heterophasic propylene polymerization material.

As described above, the polymer II contains monomer units derived from at least one $\alpha$-olefin selected from the group consisting of ethylene and C4-12 $\alpha$-olefins and monomer units derived from propylene. Preferably, the polymer II contains 30 wt% or more of monomer units derived from at least one $\alpha$-olefin selected from the group consisting of ethylene and C4-12 $\alpha$-olefins, and contains monomer units derived from propylene.

In the polymer II, a content of the monomer units derived from at least one $\alpha$-olefin selected from the group consisting of ethylene and C4-12 $\alpha$-olefins may be 30 to 70 wt% or 35 to 60 wt%.

In the polymer II, the at least one $\alpha$-olefin selected from the group consisting of ethylene and C4-12 $\alpha$-olefins is preferably at least one selected from the group consisting of ethylene and C4-10 $\alpha$-olefins, more preferably at least one selected from the group consisting of ethylene, 1-butene, 1-hexene, 1-octene, and 1-decene, and still more preferably at least one selected from the group consisting of ethylene and 1-butene.

Examples of the polymer II include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. Among them, a propylene-ethylene copolymer, a propylene-1-butene copolymer, and a propylene-ethylene-1-butene copolymer are preferable, and a propylene-ethylene copolymer is more preferable.

A content of the polymer II is preferably 1 to 50 wt%, and more preferably 5 to 40 wt%, based on the total weight of the heterophasic propylene polymerization material.

In the heterophasic propylene polymerization material, a content of the monomer units derived from at least one $\alpha$-olefin selected from the group consisting of ethylene and C4-12 $\alpha$-olefins may be 0.3 to 35 wt% or 0.7 to 24 wt% (provided that the total weight of the heterophasic propylene polymerization material is 100 wt%).

A content of the xylene-insoluble component (CXIS component) in the heterophasic propylene polymerization material is preferably 50 to 99 wt%, more preferably 60 to 95 wt%, based on the total weight of the heterophasic propylene polymerization material.

A content of the xylene-soluble component (CXS component) in the heterophasic propylene polymerization material is preferably 1 to 50 wt%, more preferably 5 to 40 wt%, based on the total weight of the heterophasic propylene polymerization material.

Preferably, the isotactic pentad fraction of CXIS of the heterophasic propylene polymerization material is 0.961 or more, and may be, for example, 0.963 or more, 0.965 or more, or 0.968 or more. A lower limit thereof is preferably less than 0.981, and may be, for example, 0.980 or less, 0.978 or less, or 0.975 or less. That is, the propylene resin composition may contain a heterophasic propylene polymerization material as the propylene polymer B, and an isotactic pentad fraction of a xylene-insoluble component (CXIS) contained in the heterophasic propylene polymerization material may be 0.961 or more and less than 0.981, or may be in each of the above numerical ranges.

In the present invention, it is considered that the CXIS component in the heterophasic propylene polymerization material is mainly composed of the polymer I, and the CXS component in the heterophasic propylene polymerization material is mainly composed of the polymer II.

Examples of the heterophasic propylene polymerization material include a (propylene)-(propylene-ethylene) polymerization material, a (propylene)-(propylene-ethylene-1-butene) polymerization material, a (propylene)-(propylene-ethylene-1-hexene) polymerization material, a (propylene)-(propylene-ethylene-1-octene) polymerization material, a (propylene)-(propylene-1-butene) polymerization material, a (propylene)-(propylene-1-hexene) polymerization material, a (propylene)-(propylene-1-octene) polymerization material, a (propylene)-(propylene-1-decene) polymerization material, a (propylene-ethylene)-(propylene-ethylene) polymerization material, a (propylene-ethylene)-(propylene-ethylene-1-butene) polymerization material, a (propylene-ethylene)-(propylene-ethylene-1-hexene) polymerization material, a (propylene-ethylene)-(propylene-ethylene-1-octene) polymerization material, a (propylene-ethylene)-(propylene-ethylene-1-decene) polymerization material, a (propylene-ethylene)-(propylene-1-butene) polymerization material, a (propylene-ethylene)-(propylene-1-hexene) polymerization material, a (propylene-ethylene)-(propylene-1-octene) polymerization material, a (propylene-ethylene)-(propylene-1-decene) polymerization material, a (propylene-1-butene)-(propylene-ethylene) polymerization material, a (propylene-1-butene)-(propylene-ethylene-1-butene) polymerization material, a (propylene-1-butene)-(propylene-ethylene-1-hexene) polymerization material, a (propylene-1-butene)-(propylene-ethylene-1-octene) polymerization material, a (propylene-1-butene)-(propylene-ethylene-1-decene) polymerization material, a (propylene-1-butene)-(propylene-1-butene) polymerization material, a (propylene-1-butene)-(propylene-1-hexene) polymerization material, a (propylene-1-butene)-(propylene-1-octene) polymerization material, a (propylene-1-butene)-(propylene-1-decene) polymerization material, a (propylene-1-hexene)-(propylene-1-hexene) polymerization material, a (propylene-1-hexene)-(propylene-1-octene) polymerization material, a (propylene-1-hexene)-(propylene-1-decene) polymerization material, a (propylene-1-octene)-(propylene-1-octene) polymerization material, and a (propylene-1-octene)-(propylene-1-decene) polymerization material.

Here, the description of the "(Propylene)-(propylene-ethylene) polymerization material" means "Heterophasic propylene polymerization material in which polymer I is propylene homopolymer and polymer II is propylene-ethylene copolymer". The same applies to other similar expressions.

As the heterophasic propylene polymerization material, a (propylene)-(propylene-ethylene) polymerization material, a (propylene)-(propylene-ethylene-1-butene) polymerization material, a (propylene-ethylene)-(propylene-ethylene) polymerization material, a (propylene-ethylene)-(propylene-ethylene-1-butene) polymerization material, or a (propylene-1-butene)-(propylene-1-butene) polymerization material is preferable, and a (propylene)-(propylene-ethylene) polymerization material is more preferable.

A limiting viscosity number of the polymer I ($[\eta]$I) is preferably 0.10 to 4.00 dL/g, more preferably 0.50 to 3.00 dL/g, and still more preferably 0.70 to 2.00 dL/g.

A limiting viscosity number of the polymer II ($[\eta]$II) is preferably 1.00 to 10.00 dL/g, more preferably 2.00 to 10.00 dL/g, and still more preferably 2.00 to 9.00 dL/g.

In addition, a ratio of the limiting viscosity number of the polymer II ($[\eta]$II) to the limiting viscosity number of the polymer I ($[\eta]$I) ($[\eta]$II/$[\eta]$I) is preferably 1 to 20, and more preferably 1 to 10.

The limiting viscosity number ($[\eta]$I) of the polymer I can be measured, for example, by the method described above for the polymer I of the heterophasic propylene polymerization material as the component A.

The limiting viscosity number ($[\eta]$II) of the polymer II can be measured, for example, by the method described above for the polymer I of the heterophasic propylene polymerization material as the component A.

A limiting viscosity number ($[\eta]$CXIS) of the CXIS component is preferably 0.10 to 4.00 dL/g, more preferably 0.50 to 3.00 dL/g, and still more preferably 0.70 to 2.00 dL/g.

A limiting viscosity number ($[\eta]$CXS) of the CXS component is preferably 1.00 to 10.00 dL/g, more preferably 2.00 to 10.00 dL/g, and still more preferably 2.00 to 9.00 dL/g.

A ratio of the limiting viscosity number ($[\eta]$CXS) of the CXS component to the limiting viscosity number ($[\eta]$CXIS) of the CXIS component ($[\eta]$CXS/$[\eta]$CXIS) is preferably 1 to 20, and more preferably 1 to 10.

A molecular weight distribution (Mw(I)/Mn(I)) of the polymer I is preferably 3.0 or more, and more preferably 4.0 or more.

A molecular weight distribution (Mw(CXIS)/Mn(CXIS)) of the CXIS component is preferably 3.0 or more, and more preferably 4.0 or more.

A melt flow rate of the component B at a temperature of 230°C and a load of 2.16 kgf is preferably 0.1 g/10 min or more and more preferably 1 to 300 g/10 min from the viewpoint of molding processability of the resin composition.

The present resin composition may contain a recycled propylene polymer B, and may contain a virgin propylene polymer B, as the component B.

Propylene polymer C

The component C is a polymer having 50 wt% or more of monomer units derived from propylene, and the isotactic pentad fraction of the component C is 0.981 or more. Examples of the component C include a propylene homopolymer, a random copolymer of propylene and a monomer other than propylene, and a heterophasic propylene polymerization material. The propylene resin composition of the present invention may contain only one type of component C or two or more types of components C. The component C preferably contains at least one selected from the group consisting of a propylene homopolymer and a heterophasic propylene polymerization material from the viewpoint of rigidity and impact resistance of the molded article, and more preferably is a heterophasic propylene polymerization material.

The isotactic pentad fraction of the component C is 0.981 or more, and may be, for example, 0.983 or more, 0.985 or more, or 0.990 or more. An upper limit thereof is not particularly limited, and may be, for example, 1.000 or less, 0.998 or less, 0.995 or less, or 0.990 or less.

Propylene homopolymer

When the present resin composition contains a propylene homopolymer as the component C, a limiting viscosity number ($[\eta]$) of the propylene homopolymer is preferably 0.10 to 4.00 dL/g, more preferably 0.50 to 3.00 dL/g, and still more preferably 0.70 to 2.00 dL/g, from the viewpoint of fluidity of the resin composition during melting and the toughness of the molded article.

A molecular weight distribution (Mw/Mn) of the propylene homopolymer is preferably 3.0 or more, and more preferably 4.0 or more. The molecular weight distribution of the component C may be 15.0 or less or 10.0 or less. The molecular weight distribution of the component C is preferably 3.0 to 15.0, and more preferably 4.0 to 10.0.

The propylene homopolymer as the component C can be produced, for example, by polymerizing propylene according to a polymerization catalyst, a polymerization method, a polymerization manner, and polymerization conditions that can be used in the production of the propylene homopolymer as the component A.

Random copolymer of propylene and monomer other than propylene

The random copolymer of propylene and a monomer other than propylene contains monomer units derived from propylene and monomer units derived from a monomer other than propylene. When the present resin composition contains the random copolymer as the component C, the random copolymer preferably contains 0.01 to 20 wt% of monomer units derived from a monomer other than propylene based on the weight of the random copolymer.

Examples of the monomer other than propylene include ethylene and C4-12 α-olefins. Among them, at least one selected from the group consisting of ethylene and C4-10 α-olefins is preferable, at least one selected from the group consisting of ethylene, 1-butene, 1-hexene, and 1-octene is more preferable, and at least one selected from the group consisting of ethylene and 1-butene is still more preferable.

Examples of the random copolymer include a propylene-ethylene random copolymer, a propylene-1-butene random copolymer, a propylene-1-hexene random copolymer, a propylene-1-octene random copolymer, a propylene-ethylene-1-butene random copolymer, a propylene-ethylene-1-hexene random copolymer, and a propylene-ethylene-1-octene random copolymer.

When the present resin composition contains the random copolymer as the component C, a limiting viscosity number ($[\eta]$) of the random copolymer is preferably 0.10 to 4.00 dL/g, more preferably 0.50 to 3.00 dL/g, and still more preferably 0.70 to 2.00 dL/g, from the viewpoint of fluidity of the resin composition during melting.

A molecular weight distribution (Mw/Mn) of the random polymer is preferably 3.0 or more, and more preferably 4.0 or more. The molecular weight distribution of the random polymer may be 10.0 or less or 7.0 or less. The molecular weight distribution of the random polymer is preferably 3.0 to 10.0, and more preferably 4.0 to 7.0.

The random copolymer can be produced, for example, by polymerizing propylene and a monomer other than propylene according to a polymerization catalyst, a polymerization method, a polymerization manner, and polymerization conditions that can be used in the production of the propylene homopolymer.

Heterophasic propylene polymerization material

When the present resin composition contains a heterophasic propylene polymerization material as the component C, the heterophasic propylene polymerization material can be produced, for example, by performing a first polymerization step of forming a polymer I and a second polymerization step of forming a polymer II. These polymerization steps can be performed according to a polymerization catalyst, a polymerization method, a polymerization manner, and polymerization conditions that can be used in the production of the propylene homopolymer.

In the heterophasic propylene polymerization material, when the total weight of the heterophasic propylene polymerization material is 100 wt%, a total of the polymer I and the polymer II contained in the heterophasic propylene polymerization material may be 100 wt%.

As described above, the polymer I contains 80 wt% or more of monomer units derived from propylene. The polymer I may be, for example, a propylene homopolymer or may contain monomer units derived from a monomer other than propylene. When the polymer I contains monomer units derived from a monomer other than propylene, a content thereof may be, for example, 0.01 wt% or more and less than 20 wt% based on the total weight of the polymer I.

Examples of the monomer other than propylene include ethylene and C4 or higher α-olefins. Among them, at least one selected from the group consisting of ethylene and C4-10 α-olefins is preferable, at least one selected from the group consisting of ethylene, 1-butene, 1-hexene, and 1-octene is more preferable, and at least one selected from the group consisting of ethylene and 1-butene is still more preferable.

Examples of the copolymer containing monomer units derived from a monomer other than propylene include a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

From the viewpoint of the dimensional stability of the molded article, the polymer I is preferably a propylene homopolymer, a propylene-ethylene copolymer, a propylene-1-butene copolymer, or a propylene-ethylene-1-butene copolymer, and more preferably a propylene homopolymer.

Preferably, the isotactic pentad fraction of the polymer I is 0.981 or more, and may be, for example, 0.983 or more, 0.985 or more, or 0.990 or more. An upper limit thereof is not particularly limited, and may be, for example, 1.000 or less, 0.998 or less, 0.995 or less, or 0.990 or less.

A content of the polymer I is preferably 50 to 99 wt%, and more preferably 60 to 95 wt%, based on the total weight of the heterophasic propylene polymerization material.

As described above, the polymer II contains monomer units derived from at least one α-olefin selected from the group consisting of ethylene and C4-12 α-olefins and monomer units derived from propylene. Preferably, the polymer II contains 30 wt% or more of monomer units derived from at least one α-olefin selected from the group consisting of ethylene and C4-12 α-olefins, and contains monomer units derived from propylene.

In the polymer II, a content of the monomer units derived from at least one α-olefin selected from the group consisting of ethylene and C4-12 α-olefins may be 30 to 70 wt% or 35 to 60 wt%.

In the polymer II, the at least one α-olefin selected from the group consisting of ethylene and C4-12 α-olefins is preferably at least one selected from the group consisting of ethylene and C4-10 α-olefins, more preferably at least one selected from the group consisting of ethylene, 1-butene, 1-hexene, 1-octene, and 1-decene, and still more preferably at least one selected from the group consisting of ethylene and 1-butene.

Examples of the polymer II include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. Among them, a propylene-ethylene copolymer, a propylene-1-butene copolymer, and a propylene-ethylene-1-butene copolymer are preferable, and a propylene-ethylene copolymer is more preferable.

A content of the polymer II is preferably 1 to 50 wt%, and more preferably 5 to 40 wt%, based on the total weight of the heterophasic propylene polymerization material.

In the heterophasic propylene polymerization material, a content of the monomer units derived from at least one α-olefin selected from the group consisting of ethylene and C4-12 α-olefins may be 0.3 to 35 wt% or 0.7 to 24 wt% (provided that the total weight of the heterophasic propylene polymerization material is 100 wt%).

A content of the xylene-insoluble component (CXIS component) in the heterophasic propylene polymerization material is preferably 50 to 99 wt%, more preferably 60 to 95 wt%, based on the total weight of the heterophasic propylene polymerization material.

A content of the xylene-soluble component (CXS component) in the heterophasic propylene polymerization material is preferably 1 to 50 wt%, more preferably 5 to 40 wt%, based on the total weight of the heterophasic propylene polymerization material.

Preferably, the isotactic pentad fraction of CXIS of the heterophasic propylene polymerization material is 0.981 or more, and may be, for example, 0.983 or more, 0.985 or more, or 0.990 or more. An upper limit thereof is not particularly limited, and may be, for example, 1.000 or less, 0.998 or less, 0.995 or less, or 0.990 or less.

In the present invention, it is considered that the CXIS component in the heterophasic propylene polymerization material is mainly composed of the polymer I, and the CXS component in the heterophasic propylene polymerization material is mainly composed of the polymer II.

Examples of the heterophasic propylene polymerization material include a (propylene)-(propylene-ethylene) polymerization material, a (propylene)-(propylene-ethylene-1-butene) polymerization material, a (propylene)-(propylene-ethylene-1-hexene) polymerization material, a (propylene)-(propylene-ethylene-1-octene) polymerization material, a (propylene)-(propylene-1-butene) polymerization material, a (propylene)-(propylene-1-hexene) polymerization material, a (propylene)-(propylene-1-octene) polymerization material, a (propylene)-(propylene-1-decene) polymerization material, a (propylene-ethylene)-(propylene-ethylene) polymerization material, a (propylene-ethylene)-(propylene-ethylene-1-butene) polymerization material, a (propylene-ethylene)-(propylene-ethylene-1-hexene) polymerization material, a (propylene-ethylene)-(propylene-ethylene-1-octene) polymerization material, a (propylene-ethylene)-(propylene-ethylene-1-decene) polymerization material, a (propylene-ethylene)-(propylene-1-butene) polymerization material, a (propylene-ethylene)-(propylene-1-hexene) polymerization material, a (propylene-ethylene)-(propylene-1-octene) polymerization material, a (propylene-ethylene)-(propylene-1-decene) polymerization material, a (propylene-1-butene)-(propylene-ethylene) polymerization material, a (propylene-1-butene)-(propylene-ethylene-1-butene) polymerization material, a (propylene-1-butene)-(propylene-ethylene-1-hexene) polymerization material, a (propylene-1-butene)-(propylene-ethylene-1-octene) polymerization material, a (propylene-1-butene)-(propylene-ethylene-1-decene) polymerization material, a (propylene-1-butene)-(propylene-1-butene) polymerization material, a (propylene-1-butene)-(propylene-1-hexene) polymerization material, a (propylene-1-butene)-(propylene-1-octene) polymerization material, a (propylene-1-butene)-(propylene-1-decene) polymerization material, a (propylene-1-hexene)-(propylene-1-hexene) polymerization material, a (propylene-1-hexene)-(propylene-1-octene) polymerization material, a (propylene-1-hexene)-(propylene-1-decene) polymerization material, a (propylene-1-octene)-(propylene-1-octene) polymerization material, and a (propylene-1-octene)-(propylene-1-decene) polymerization material.

Here, the description of the "(Propylene)-(propylene-ethylene) polymerization material" means "Heterophasic propylene polymerization material in which polymer I is propylene homopolymer and polymer II is propylene-ethylene copolymer". The same applies to other similar expressions.

As the heterophasic propylene polymerization material, a (propylene)-(propylene-ethylene) polymerization material, a (propylene)-(propylene-ethylene-1-butene) polymerization material, a (propylene-ethylene)-(propylene-ethylene) polymerization material, a (propylene-ethylene)-(propylene-ethylene-1-butene) polymerization material, or a (propylene-1-butene)-(propylene-1-butene) polymerization material is preferable, and a (propylene)-(propylene-ethylene) polymerization material is more preferable.

A limiting viscosity number of the polymer I ([η]I) is preferably 0.10 to 4.00 dL/g, more preferably 0.50 to 3.00 dL/g, and still more preferably 0.70 to 2.00 dL/g.

A limiting viscosity number of the polymer II ([η]II) is preferably 1.00 to 10.00 dL/g, more preferably 2.00 to 10.00 dL/g, and still more preferably 2.00 to 9.00 dL/g.

In addition, a ratio of the limiting viscosity number of the polymer II ([η]II) to the limiting viscosity number of the polymer I ([η]I) ([η]II/[η]I) is preferably 1 to 20, and more preferably 1 to 10.

The limiting viscosity number ([η]I) of the polymer I can be measured, for example, by the method described above for the polymer I of the heterophasic propylene polymerization material as the component A.

The limiting viscosity number ([η]II) of the polymer II can be measured, for example, by the method described above for the polymer I of the heterophasic propylene polymerization material as the component A.

A limiting viscosity number ([η]CXIS) of the CXIS component is preferably 0.10 to 4.00 dL/g, more preferably 0.50 to 3.00 dL/g, and still more preferably 0.70 to 2.00 dL/g.

A limiting viscosity number ([η]CXS) of the CXS component is preferably 1.00 to 10.00 dL/g, more preferably 2.00 to 10.00 dL/g, and still more preferably 2.00 to 9.00 dL/g.

A ratio of the limiting viscosity number ([η]CXS) of the CXS component to the limiting viscosity number ([η]CXIS) of the CXIS component ([η]CXS/[η]CXIS) is preferably 1 to 20, and more preferably 1 to 10.

A molecular weight distribution (Mw(I)/Mn(I)) of the polymer I is preferably 3.0 or more, and more preferably 4.0 or more.

A molecular weight distribution (Mw(CXIS)/Mn(CXIS)) of the CXIS component is preferably 3.0 or more, and more preferably 4.0 or more.

A melt flow rate of the component C at a temperature of 230°C and a load of 2.16 kgf is preferably 0.1 g/10 min or more and more preferably 1 to 300 g/10 min from the viewpoint of molding processability of the resin composition.

The present resin composition may contain a recycled propylene polymer C, and may contain a virgin propylene polymer C, as the component C.

Ethylene-α-olefin copolymer D

In one aspect, the present resin composition contains an ethylene-α-olefin polymer D. The ethylene-α-olefin polymer D may be an ethylene-α-olefin random polymer Dr.

In the component D, a total content of monomer units derived from ethylene and monomer units derived from C4 or higher α-olefins contained in the component D may be 100 wt% based on 100 wt% of a total weight of the component D.

Examples of C4 or higher α-olefins include C4-12 α-olefins. Examples of C4-12 α-olefins include 1-butene, 1-pentene, 1-hexene, 4-methyl-1-pentene, 1-octene, and 1-decene. Among them, 1-butene, 1-hexene, and 1-octene are preferable. The α-olefin may be an α-olefin having a cyclic structure such as vinylcyclopropane or vinylcyclobutane.

Examples of the component D include an ethylene-1-butene copolymer, an ethylene-1-hexene copolymer, an ethylene-1-octene copolymer, an ethylene-1-decene copolymer, an ethylene-(3-methyl-1-butene) copolymer, and a copolymer of ethylene and an α-olefin having a cyclic structure.

In the component D, the content of the monomer units derived from C4 or higher α-olefin is preferably 1 to 49 wt%, more preferably 5 to 49 wt%, and still more preferably 24 to 49 wt%, based on the total weight of the component D.

A density of the component D is preferably 0.85 to 0.89 g/cm$^3$, more preferably 0.85 to 0.88 g/cm$^3$, and still more preferably 0.85 to 0.87 g/cm$^3$, from the viewpoint of impact resistance of the molded article.

A melt flow rate of the component D at a temperature of 190°C and a load of 2.16 kgf is preferably 0.1 to 80 g/10 min.

Method for producing component D

The component D can be produced by polymerizing ethylene and C4 or higher α-olefins using a polymerization catalyst.

Examples of the polymerization catalyst include a homogeneous catalyst represented by a metallocene catalyst and a Ziegler-Natta catalyst.

Examples of the homogeneous catalyst include a catalyst containing a compound of a transition metal of Group 4 in the periodic table having a cyclopentadienyl ring and alkylaluminoxane; a catalyst containing a compound of a transition metal of Group 4 in the periodic table having a cyclopentadienyl ring, a compound that reacts with the transition metal compound to form an ionic complex, and an organoaluminum compound; and a modified catalyst formed by supporting catalytic components (a compound of a transition metal of Group 4 in the periodic table having a cyclopentadienyl ring, a compound that forms an ionic complex, an organoaluminum compound, and the like) on inorganic particles (silica, clay minerals, and the like).

Examples of Ziegler-Natta catalyst include a catalyst in which a titanium-containing solid transition metal component and an organometallic component are combined.

As the component D, a commercially available product may be used. Examples of the commercially available component D include ENGAGE (registered trademark) manufactured by Dow Chemical Japan Ltd., TAFMER (registered trademark) manufactured by Mitsui Chemicals, Inc., NEO-ZEX (registered trademark) and ULT-ZEX (registered trademark) manufactured by Prime Polymer Co., Ltd., and EXCELLEN FX (registered trademark), SUMICASEN (registered trademark), and ESPRENE SPO (registered trademark) manufactured by Sumitomo Chemical Co., Ltd.

The present resin composition may contain a recycled ethylene-$\alpha$-olefin copolymer, and may contain a virgin ethylene-$\alpha$-olefin copolymer, as the component D. The ethylene-$\alpha$-olefin copolymer may be contained in the raw material when the propylene polymer is recycled, and the recycled ethylene-$\alpha$-olefin copolymer may be contained in the raw material for preparing the present resin composition together with the recycled propylene polymer.

Filler E

In one aspect, the present resin composition contains a filler E.

Examples of the component E include an inorganic filler and an organic filler. The propylene resin composition of the present invention may contain only one type of component E or two or more types of components E.

Examples of the inorganic filler include glass, silicate mineral, alumina, silica, silicon dioxide, titanium oxide, iron oxide, aluminum oxide, magnesium oxide, antimony oxide, barium ferrite, strontium ferrite, beryllium oxide, magnesium hydroxide, aluminum hydroxide, basic magnesium carbonate, calcium carbonate, magnesium carbonate, carbonate mineral, calcium sulfate, magnesium sulfate, basic magnesium sulfate, calcium sulfite, carbon black, and cadmium sulfide.

Examples of the organic filler include polyester, aromatic polyamide, cellulose, and vinylon.

The shape of the filler may be a plate shape, a needle shape, or a fiber shape.

From the viewpoint of rigidity, impact resistance, and dimensional stability of the molded article, the component E is preferably an inorganic filler, and more preferably talc which is a plate-shaped silicate mineral.

An average particle diameter D50[L] of the component E is preferably 20.0 $\mu$m or less, and more preferably 15.0 $\mu$m or less, from the viewpoint of rigidity, impact resistance, and dimensional stability of a molded article. The average particle diameter D50[L] of the component E may be 2.0 $\mu$m or more or 4.0 $\mu$m or more. The average particle diameter D50[L] of a component E is preferably 2.0 to 20.0 $\mu$m and more preferably 4.0 to 15.0 $\mu$m.

An average particle diameter D50[S] of the component E is preferably 5.0 $\mu$m or less, and more preferably 3.0 $\mu$m or less, from the viewpoint of rigidity, impact resistance, and dimensional stability of a molded article.

The average particle diameter D50[S] of the component E may be 0.5 $\mu$m or more or 1.0 $\mu$m or more. The average particle diameter D50[S] of the component E is preferably 0.5 to 5.0 $\mu$m and more preferably 1.0 to 3.0 $\mu$m.

A ratio of the average particle diameter D50[L] of the component E to the average particle diameter D50[S] of the component E (D50[L]/D50[S]) may be 1.5 or more or 2.5 or more, from the viewpoint of rigidity and dimensional stability of a molded article. D50[L]/D50[S] may be 10 or less or 8 or less. D50[L]/D50[S] may be 1.5 to 10, 1.5 to 8, 2.5 to 10, or 2.5 to 8.

In the present specification, the "average particle diameter D50[L]" is determined based a volume-based particle diameter distribution measurement data measured by a laser diffraction method according to a method specified in JIS R1629. In the particle diameter distribution measurement data, the average particle diameter D50[L] refers to a particle diameter (particle diameter equivalent to 50%) when a cumulative number of particles from a smaller particle diameter side reaches 50%. The particle diameter defined as described above is generally referred to as a "50% equivalent particle diameter" and is denoted by "D50".

In the present specification, the "average particle diameter D50[S]" is determined based a volume-based particle diameter distribution measurement data measured by a centrifugal sedimentation method according to a method specified in JIS R1619. In the particle diameter distribution measurement data, the average particle diameter D50[S] refers to a particle diameter (particle diameter equivalent to 50%) when a cumulative number of particles from a smaller particle diameter side reaches 50%.

The larger the ratio of the average particle diameter D50[L] to the average particle diameter D50[S] of the component E (D50[L]/D50[S]), the better the rigidity and dimensional stability of the molded article.

The present resin composition may contain a recycled filler, and may contain a virgin filler, as the component E. The filler may be contained in the raw material when the propylene polymer is recycled, and the recycled filler may be contained in the raw material for preparing the present resin composition together with the recycled propylene polymer.

Content of each component

In the propylene resin composition of the present invention, the content of each component is not particularly limited. From the viewpoint of hinge resistance of the molded article, the content of the component A' is preferably 1 to 99 parts by weight, 5 to 95 parts by weight, 10 to 90 parts by weight, or 20 to 80 parts by weight, with respect to 100 parts by weight of the total content of the components A' and C. From the viewpoint of hinge resistance of the molded article, the content of the component B is preferably 1 to 99 parts by weight, 5 to 95 parts by weight, 10 to 90 parts by weight, or 20 to 80 parts by weight, with respect to 100 parts by weight of the total content of the components A' and C. From the viewpoint of hinge resistance of the molded article, the content of the component C is preferably 1 to 99 parts by weight, 5 to 95 parts by weight, 10 to 90 parts by weight, 20 to 80 parts by weight, 30 to 70 parts by weight, or 40 to 60 parts by weight, with respect to 100 parts by weight of the total content of the components A' and C.

When the propylene resin composition of the present invention contains the components A and B as the component A', the content of the component A is preferably 1 to 60 parts by weight, the content of the component B is 5 to 94 parts by weight, and the content of the component C is 5 to 94 parts by weight, with respect to 100 parts by weight of the total content of the components A, B, and C, from the viewpoint of hinge resistance of the molded article. More preferably, the total content of the components A and B is 10 to 90 parts by weight, the content of the component A is 1 to 60 parts by weight, the content of the component B is 5 to 89 parts by weight, and the content of the component C is 10 to 90 parts by weight, with respect to 100 parts by weight of the total content of the components A, B, and C.

Preferably, the content of the component C is more than the content of the component A.

Preferably, the content of the component B is more than the content of the component A.

When the propylene resin composition of the present invention contains the component D, the content of the component D may be 0 to 50 parts by weight, 0.1 to 40 parts by weight, 1 to 40 parts by weight, 1 to 30 parts by weight, or 5 to 25 parts by weight, with respect to 100 parts by weight of the total content of the components A to D, from the viewpoint of hinge resistance of the molded article. In addition, the content of the component D may be 0 to 50 wt%, 0.1 to 40 wt%, 1 to 40 wt%, 1 to 30 wt%, or 5 to 25 wt%, and is preferably 1 to 40 wt%, 1 to 30 wt%, or 5 to 25 wt%, based on the total weight of the propylene resin composition.

When the propylene resin composition of the present invention contains the component E, the content of the component E may be 0 to 80 parts by weight, 1 to 60 parts by weight, 5 to 50 parts by weight, 10 to 40 parts by weight, 10 to 35 parts by weight, or 15 to 25 parts by weight, with respect to 100 parts by weight of the total content of the components A to E, from the viewpoint of hinge resistance of the molded article.

From the viewpoint of hinge resistance of the molded article, the total amount of all the polymers contained in the propylene resin composition is preferably 70 wt% or more, 75 wt% or more, 80 wt% or more, 85 wt% or more, 90 wt%, or 95 wt% or more, based on the total weight of the propylene resin composition of the present invention. Note that the "total amount of all the polymers contained in the propylene resin composition" means the total amount of all the polymers contained in the propylene resin composition of the present invention, for example, when a propylene homopolymer, a propylene copolymer, and another polymer are contained, all the polymers.

From the viewpoint of hinge resistance of the molded article, the total content of the components A to E is preferably 50 wt% or more, 60 wt% or more, 70 wt% or more, 80 wt% or more, or 90 wt% or more, based on the total weight of the propylene resin composition of the present invention.

From the viewpoint of hinge resistance of the molded article, the total amount of the component A' and the component C is preferably 40 wt% or more, or 50 wt% or more, based on the total weight of the propylene resin composition of the present invention. When the component A' contains the component A and the component B, the total amount of the component A, the component B, and the component C is preferably 40 wt% or more or 50 wt% or more.

Method for preparing propylene resin composition

The propylene resin composition of the present invention can be obtained by melt-kneading each raw material component. A temperature during the melt-kneading may be 180°C or higher, 180 to 300°C, or 180 to 250°C.

For the melt-kneading, a Banbury mixer, a single-screw extruder, a twin-screw co-direction rotary extruder, or the like can be used.

The order of kneading the raw material components is not particularly limited. For example, the components A to E may be kneaded at once, or some of the components A to E may be kneaded, and then the resulting kneaded product and the other components may be kneaded.

The shape of the propylene resin composition is not particularly limited, and the propylene resin composition may have, for example, a strand shape, a sheet shape, a flat plate shape, or a pellet shape. The pellet-shaped resin composition can be prepared, for example, by forming a strand-shaped resin composition and then cutting the resin composition into an appropriate length.

From the viewpoint of molding processability of the resin composition and production stability in the case of producing a molded article, the shape of the resin composition before being molded into a molded article is preferably a pellet shape having a length of about 1 to 50 mm.

The propylene resin composition of the present invention may contain components other than the above components. Examples of such components include thermoplastic resins (polystyrenes (for example, polystyrene, poly(p-methylstyrene), poly($\alpha$-methylstyrene), and AS (acrylonitrile/styrene copolymer) resins), ABS (acrylonitrile/butadiene/styrene copolymer) resins, AAS (special acrylic rubber/acrylonitrile/styrene copolymer) resins, ACS (acrylonitrile/-chlorinated polyethylene/styrene copolymer) resins, polychloroprene, chlorinated rubber, polyvinyl chloride, polyvinylidene chloride, acrylic resins, ethylene/vinyl alcohol copolymer resins, fluororesins, polyacetal, grafted polyphenylene ether resins, and polyphenylene sulfide resins, polyurethane, polyamide, polyester resins (for example, polyethylene terephthalate and polybutylene terephthalate), polycarbonate, polysulfone, polyether ether ketone, polyether sulfone, aromatic polyester resin, polybutadiene, 1,2-polybutadiene, polyisoprene, styrene/butadiene copolymers, butadiene/acrylonitrile copolymers, natural rubber, and the like), epoxy resins, diallyl phthalate prepolymers, silicone resins, silicone rubbers, epichlorohydrin rubber, acrylic rubber, even PLA resins produced by polymerizing plant-derived monomers extracted from bio raw materials (polylactic acid), neutralizing agents, antioxidants, ultraviolet absorbers, nucleating agents, lubricants, antistatic agents, antiblocking agents, processing aids, organic peroxides, colorants (inorganic pigments, organic pigments, pigment dispersants, and the like), foaming agents, nucleating agents, plasticizers, flame retardants, crosslinking agents, crosslinking aids, brightness enhancers, antibacterial agents, and light diffusing agents.

The component that may be contained in the present resin composition as a component other than the components A to E may be a virgin material, may be a recycled material, may be contained in a raw material when recycled, or may be contained in a raw material for preparing the present resin composition together with a recycled propylene polymer.

Properties of propylene resin composition

In one aspect, a melt flow rate (temperature 230°C, load 2.16 kgf) of the propylene resin composition of the present invention is preferably 1 to 100 g/10 min, and may be 12 to 70 g/10 min or 15 to 40 g/10 min. From the viewpoint of molding processability, the MFR of the propylene resin composition is preferably 10 g/10 min or more. From the viewpoint of the impact strength of the resulting molded article, the MFR of the propylene resin composition is preferably 100 g/10 min or less.

In one aspect, a density of the propylene resin composition of the present invention is preferably 1.30 g/cm$^3$ or less, more preferably 1.20 g/cm$^3$ or less, still more preferably 1.10 g/cm$^3$ or less.

In one aspect, the density of the propylene resin composition of the present invention is preferably 0.80 g/cm$^3$ or more, more preferably 0.85 g/cm$^3$ or more, still more preferably 0.90 g/cm$^3$ or more.

The density of the propylene resin composition of the present invention is measured by a water substitution method as Method A described in JIS K7112.

The propylene resin composition of the present invention can be used as a material for forming a molded article by molding. The propylene resin composition of the present invention is preferably used as a material for injection molding. Hereinafter, an example of an injection molded article produced using the propylene resin composition of the present invention as a material for injection molding will be described.

Molded article

The molded article of the present invention contains (is made of) the propylene resin composition of the present invention. The molded article of the present invention has excellent solvent crack resistance and/or hinge resistance.

The injection molded article can be produced by an injection molding method. Examples of the injection molding method include a general injection molding method, an injection foam molding method, a supercritical injection foam molding method, an ultrahigh speed injection molding method, an injection compression molding method, a gas-assist injection molding method, a sandwich molding method, a sandwich foam molding method, and an insert·outsert molding method. The shape of the injection molded article is not particularly limited.

The injection molded article of the present invention can be preferably used for, for example, automobile material applications, home appliance material applications, and container applications, and is particularly suitable for automobile interior and exterior applications. Examples of automobile interior and exterior parts include a door trim, a pillar, an instrument panel, and a bumper.

EXAMPLES

Hereinafter, the present invention will be described in more detail with reference to Examples. However, the present invention is not limited to these Examples.

In Examples and Comparative Examples, the following raw materials were used.

Component A: propylene polymer having isotactic pentad fraction of less than 0.961

The following propylene polymers (heterophasic propylene polymerization materials) (components A-1 and A-2) were prepared as the component A.

(A-1) Propylene polymer (heterophasic propylene polymerization material)

Content of monomer units derived from ethylene in heterophasic propylene polymerization material: 9.5 wt%

Isotactic pentad fraction of CXIS: 0.958
Polymer I: propylene homopolymer
Polymer II: propylene-ethylene copolymer
Content of polymer II: 17.4 wt%

(A-2) Propylene polymer (heterophasic propylene polymerization material)

Content of monomer units derived from ethylene in heterophasic propylene polymerization material: 5.2 wt%

Isotactic pentad fraction of CXIS: 0.957
Polymer I: propylene homopolymer
Polymer II: propylene-ethylene copolymer component
Content of polymer II: 11.9 wt%

The isotactic pentad fraction was measured according to the method described above, and the contents of the CXIS component and the CXS component and the ethylene content in the polymer II were calculated by the following method.

Contents of CXIS component and CXS component

2 g of the heterophasic propylene polymerization material was weighed (hereinafter, the "weight of the heterophasic propylene polymerization material" is referred to as "a"), and heated and dissolved in boiling xylene for 2 hours. Then, the resulting material was cooled to 20°C, and then filtered using filter paper. The filtered filtrate was concentrated under reduced pressure using a rotary evaporator to obtain a CXS component. The resulting CXS component was weighed (hereinafter, the "weight of CXS component" is referred to as "b"). The contents of the CXIS component and the CXS component in the heterophasic propylene polymerization material were calculated by the following equation using the numerical values a and b. In addition, the solid remaining on the filter paper was vacuum-dried to obtain a CXIS component. The obtained CXIS component was used for evaluation of molecular weight distribution.

$$\mathtt{Amount\ of\ CXS\ component\ (wt\%)=(b/a)\times100}$$

Amount of CXIS component (wt%)=100-Amount of CXS component (wt%)

Content of monomer units derived from ethylene in heterophasic propylene polymerization material

The content of the monomer units derived from ethylene in the heterophasic propylene polymerization material was determined from a $^{13}$C-NMR spectrum measured under the following conditions based on a report by Kakugo et al. (Macromolecules, 15, 1150-1152 (1982)). The $^{13}$C-NMR spectrum was measured under the following conditions using a sample obtained by uniformly dissolving about 200 mg of the heterophasic propylene polymerization material in 3 mL of orthodichlorobenzene in a test tube having a diameter of 10 mm.

Measurement temperature: 135°C
Pulse repeating time: 10 seconds
Pulse width: 45°
Number of integrations: 2,500 times

Component B: propylene polymer having isotactic pentad fraction of 0.961 or more and less than 0.981

The following propylene polymers (components B-1 and B-2) were prepared as the component B.

(B-1) Propylene polymer (heterophasic propylene polymerization material)

Content of monomer units derived from ethylene in heterophasic propylene polymerization material: 6.5 wt%

Isotactic pentad fraction of CXIS: 0.965
Polymer I: propylene homopolymer
Polymer II: propylene-ethylene copolymer
Content of polymer II: 14.4 wt%

(B-2) Recycled propylene polymer (heterophasic propylene polymerization material)

Content of monomer units derived from ethylene in heterophasic propylene polymerization material: 6.5 wt%

Isotactic pentad fraction of CXIS: 0.965
Polymer I: propylene homopolymer
Polymer II: propylene-ethylene copolymer
Content of polymer II: 14.4 wt%

(B-3) Propylene polymer (heterophasic propylene polymerization material)

Content of monomer units derived from ethylene in heterophasic propylene polymerization material: 3.8 wt%

Isotactic pentad fraction of CXIS: 0.977
Polymer I: propylene homopolymer
Polymer II: propylene-ethylene copolymer
Content of polymer II: 9.2 wt%

Component C: propylene polymer component having isotactic pentad fraction of 0.981 or more

The following propylene polymer (heterophasic propylene polymerization materials) (component C-1) was prepared as the component C.

(C-1) Propylene polymer (heterophasic propylene polymerization material)

Content of monomer units derived from ethylene in heterophasic propylene polymerization material: 9.0 wt%

Isotactic pentad fraction of CXIS: 0.982
Polymer I: propylene homopolymer
Polymer II: propylene-ethylene copolymer
Content of polymer II: 25.0 wt%

Component D: ethylene-$\alpha$-olefin copolymer D

The following ethylene-$\alpha$-olefin copolymer (component D-1) was prepared as the component D.

(D-1) Ethylene-1-butene copolymer

"ENGAGE EG7467" manufactured by The Dow Chemical Company

Density=0.862 g/cm$^3$
MFR (measurement at temperature of 190°C and load of 2.16 kgf): 1.0 g/10 min

Component E: filler

The following filler was prepared as the component E.

Talc: "MW UPN-TT-H" manufactured by HAYASHI KASEI Co.,Ltd.

Average particle diameter (50% particle diameter): 4.7 $\mu$m (measured using laser diffraction type SALD1100 (manufactured by Shimadzu Corporation))

Examples 1 to 8 and Comparative Examples 1 to 8

Preparation of propylene resin composition

The components A, B, C, D, and E were prepared in the amounts (parts by weight) shown in Table 1.

The prepared components were premixed uniformly with a Henschel mixer or a tumbler, and then melt-kneaded with a single-screw extruder model V40-NSIII (cylinder inner diameter: 40.0 mm, screw outer diameter: 39.5 mm, L/D=28) manufactured by TANABE PLASTICS MACHINERY CO.,LTD. under the conditions of a cylinder temperature of 200°C, a screw rotation speed of 100 rpm, and a discharge amount of 14 kg/hr to prepare a pellet-shaped propylene-based resin composition. The physical properties of the resulting resin composition are shown in Table 1.

Note that, in Examples 1 to 8 and Comparative Examples 1 to 8, a preparation method different from those in Examples 9 to 12 described below is performed, but the same resin composition can be obtained even in the same preparation method as in Examples 9 to 12.

Evaluation of hinge resistance

Using a bending tester (Toyo Seiki Seisaku-sho, Ltd.), an operation of fixing short portions at both ends of an injection molded article test piece to be described below, bending the injection molded article test piece in a horizontal direction, returning the injection molded article test piece to a straight line, bending the injection molded article test piece in an opposite direction, and then returning the injection molded article test piece to a straight line was repeated 20,000 times, and whether or not the surface of the bent portion was cracked was visually confirmed by three panelists to obtain a common opinion. In the table, the case where there is no crack on the surface of the bent portion is indicated as o, and the case where there is a crack on the surface of the bent portion is indicated as ×. If a crack occurred, the length of the crack was measured.

Note that, in Examples 1 to 8 and Comparative Examples 1 to 8, an evaluation method different from those in Examples 9 to 12 described below is performed, but the same evaluation results can be obtained even in the same evaluation method as in Examples 9 to 12.

Production of injection molded article test piece for evaluation of hinge resistance

The resulting resin composition was injection-molded under the following conditions to produce an injection-molded article test piece for evaluation.

Injection molding machine: Si30III injection molding machine manufactured by TOYO MACHINERY & METAL CO., LTD.

Mold cavity shape: 35 mm (width) × 80 mm (length) × 2 mm (thickness)

Gate: 35 mm side film gate
Cylinder temperature: 220°C
Mold temperature: 50°C
Injection speed: 20 mm/sec
Cooling time: 30 seconds

Note that, in Examples 1 to 8 and Comparative Examples 1 to 8, a preparation method different from those in Examples 9 to 12 described below is performed, but the same test piece can be obtained even in the same preparation method as in Examples 9 to 12.

Examples 9 to 12

Preparation of propylene resin composition

The prepared components were premixed uniformly with a Henschel mixer or a tumbler, and then melt-kneaded using a twin-screw kneader KZW-15/45MG (cylinder inner diameter: 15.5 mm, screw outer diameter: 15.0 mm, L/D=45) manufactured by TECHNOVEL CORPORATION to obtain a pellet-shaped propylene-based resin composition. The conditions for melt-kneading were set to a cylinder temperature of 200°C; a screw rotation speed of 500 rpm, two screen meshes of stacked 100 mesh and 50 mesh; and an extrusion amount of 6 kg/hr.

Evaluation of hinge resistance

Using a bending tester (Toyo Seiki Seisaku-sho, Ltd.: MIT tester model DA), an operation of fixing short portions at both ends of an injection molded article test piece to be described below, bending the injection molded article test piece in a horizontal direction, returning the injection molded article test piece to a straight line, bending the injection molded article test piece in an opposite direction, and then returning the injection molded article test piece to a straight line was repeated 20,000 times, and whether or not the surface of the bent portion was cracked was visually confirmed. In the table, the case where there is no crack on the surface of the bent portion is indicated as o, and the case where there is a crack on the surface of the bent portion is indicated as ×.

Production of injection molded article test piece for evaluation of hinge resistance

The resulting resin composition was injection-molded under the following conditions to obtain an injection molded article, and the injection molded article was cut into a size of 15 mm (width) × 110 mm (length) × 2 mm (thickness) to produce a test piece for evaluation.
Injection molding machine: SE130DU injection molding machine manufactured by Sumitomo Heavy Industries, Ltd.

Mold cavity shape: 90 mm (width) × 150 mm (length) × 2 mm (thickness)

Gate: 5 mm side gate
Cylinder temperature: 220°C
Mold temperature: 50°C
Injection speed: 30 mm/sec
Cooling time: 30 seconds

[Table 1]

| | Example | | | | | | | | | | | | Comparative Example | | | | | | | |
|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 1 | 2 | 3 | 4 | 5 | 6 | 7 | 8 |
| Component (A-1) Heterophasic propylene polymerization material | 20 | - | - | - | 19 | - | 16 | - | - | - | - | - | - | - | - | - | - | - | - | - |
| Component (A-2) Heterophasic propylene polymerization material | - | 30 | - | - | - | - | - | 24 | - | - | - | - | - | - | - | - | - | 95 | 30 | 55 |
| Component (B-1) Heterophasic propylene polymerization material | 35 | 25 | 35 | 25 | 33.25 | 33.25 | 40 | 20 | 25 | 24.8 | 15 | 12.5 | 100 | - | 95 | - | - | - | - | - |
| Component (B-2) Recycled propylene polymer | - | - | - | 10 | - | - | - | - | - | - | - | - | 0 | - | - | - | - | - | - | - |
| Component (B-3) Heterophasic propylene polymerization material | - | - | - | - | - | - | - | - | - | - | - | - | - | - | - | - | 35 | - | - | - |
| Component (C-1) Heterophasic propylene polymerization material | 45 | 45 | 65 | 65 | 42.75 | 61.75 | 24 | 36 | 75 | 74.2 | 45 | 37.5 | - | 100 | - | 95 | 65 | 5 | 70 | 45 |
| Component (D-1) Ethylene-1-butene copolymer | - | - | - | - | - | - | - | - | - | 1 | 40 | 25 | - | - | - | - | - | - | - | - |
| Component (E-1) Filler talc | - | - | - | - | 5 | 5 | 20 | 20 | - | - | - | 25 | - | - | 5 | 5 | 5 | - | - | - |
| Hinge resistance | ○ | ○ | ○ | ○ | ○ | ○ | ○ | ○ | ○ | ○ | ○ | ○ | × | × | × | × | × | × | × | × |
| Crack length (unit: mm) | - | - | - | - | - | - | - | - | - | - | - | - | 34 | 2 | 21 | 34 | 3 | 34 | 34 | 34 |

From Table 1, it can be seen that the molded article according to Example is not cracked on the surface of the test piece during the bending test and has excellent hinge resistance. That is, it was confirmed that, according to the propylene resin composition of the present invention, a molded article having excellent hinge resistance can be produced, and the molded article of the present invention has excellent hinge resistance.

In Comparative Example 5 containing the two components, the component (B-3) and the component (C-1), in which the difference in isotactic pentad fraction was less than 0.001, poor hinge resistance was exhibited. In comparison, in Example 3 containing the two components, the component (B-1) and the component (C-1), in which the difference in isotactic pentad fraction was 0.001 or more, high significantly hinge resistance was exhibited.

In Comparative Example 6 containing less than 10 parts by weight of the component C, poor hinge resistance was exhibited. In comparison, in Example 7 containing 10 parts by weight or more of the component C, significantly high hinge resistance was exhibited.

In Comparative Examples 7 and 8 containing the component A having an isotactic pentad fraction of less than 0.961 but not containing the component B having an isotactic pentad fraction of 0.963 or more and less than 0.981, poor hinge resistance was exhibited. In comparison, in Example 3 containing the component B having an isotactic pentad fraction of 0.963 or more and less than 0.981, significantly high hinge resistance was exhibited.

Claims

1. A propylene resin composition comprising:

20 to 80 parts by weight of a propylene polymer A' having an isotactic pentad fraction of less than 0.981; and
20 to 80 parts by weight of a propylene polymer C having an isotactic pentad fraction of 0.981 or more (provided that a total content of the propylene polymers A' and C is 100 parts by weight),

wherein the propylene resin composition contains a propylene polymer B having an isotactic pentad fraction of 0.963 or more and less than 0.981 as the propylene polymer A',

a difference between the isotactic pentad fraction of the propylene polymer A' and the isotactic pentad fraction of the propylene polymer C is 0.010 or more,

the propylene polymer C is a heterophasic propylene polymerization material,

a total amount of all the polymers contained in the propylene resin composition is 75 wt% or more based on a total weight of the propylene resin composition, and

a total amount of the propylene polymer A' and the propylene polymer C is 50 wt% or more based on the total weight of the propylene resin composition.

2. The propylene resin composition according to claim 1, wherein an isotactic pentad fraction of a xylene-insoluble component contained in the heterophasic propylene polymerization material is 0.981 or more.

3. The propylene resin composition according to claim 1, wherein the propylene resin composition contains a recycled propylene polymer as at least one selected from the group consisting of the propylene polymer A' and the propylene polymer C.

4. The propylene resin composition according to claim 1, wherein the propylene resin composition contains a virgin propylene polymer as at least one selected from the group consisting of the propylene polymer A' and the propylene polymer C.

5. The propylene resin composition according to claim 1, wherein the propylene resin composition contains a propylene polymer A having an isotactic pentad fraction of less than 0.961 as the propylene polymer A'.

6. The propylene resin composition according to claim 1, wherein the propylene resin composition contains, as the propylene polymer A':

a propylene polymer A having an isotactic pentad fraction of less than 0.961; and
a propylene polymer B having an isotactic pentad fraction of 0.963 or more and less than 0.981.

7. The propylene resin composition according to claim 6, wherein the propylene resin composition contains a heterophasic propylene polymerization material as the propylene polymer A.

8. The propylene resin composition according to claim 1, wherein the propylene resin composition contains a heterophasic propylene polymerization material as the propylene polymer B.

9. The propylene resin composition according to claim 6, wherein the propylene resin composition contains:

1 to 60 parts by weight of the propylene polymer A;
5 to 89 parts by weight of the propylene polymer B; and
20 to 80 parts by weight of the propylene polymer C, provided that a total amount of the propylene polymer A and the propylene polymer B is 20 to 80 parts by weight (provided that a total of the propylene polymer A, the propylene polymer B, and the propylene polymer C is 100 parts by weight),
the total amount of all the polymers contained in the propylene resin composition is 75 wt% or more based on the total weight of the propylene resin composition, and
the total amount of the propylene polymer A, the propylene polymer B, and the propylene polymer C is 50 wt% or more based on the total weight of the propylene resin composition.

10. The propylene resin composition according to claim 6, wherein the propylene resin composition contains a recycled propylene polymer as at least one selected from the group consisting of the propylene polymer A, the propylene polymer B, and the propylene polymer C.

11. The propylene resin composition according to claim 6, wherein the propylene resin composition contains a virgin propylene polymer as at least one selected from the group consisting of the propylene polymer A, the propylene polymer B, and the propylene polymer C.

12. The propylene resin composition according to claim 1, further comprising an ethylene-$\alpha$-olefin copolymer D.

**13.** The propylene resin composition according to claim 12, wherein the propylene resin composition contains a recycled ethylene-$\alpha$-olefin copolymer as the ethylene-$\alpha$-olefin copolymer D.

**14.** The propylene resin composition according to claim 12, wherein the ethylene-$\alpha$-olefin copolymer D is 1 to 40 wt% based on the total weight of the propylene resin composition.

**15.** The propylene resin composition according to claim 1, further comprising a filler E.

**16.** The propylene resin composition according to claim 15, wherein the propylene resin composition contains a recycled filler as the filler E.

**17.** The propylene resin composition according to claim 15, wherein the propylene resin composition contains an inorganic filler as the filler E.

**18.** A molded article comprising the propylene resin composition according to any one of claims 1 to 17.

## INTERNATIONAL SEARCH REPORT

| International application No. |
| --- |
| **PCT/JP2024/003661** |

| A. | CLASSIFICATION OF SUBJECT MATTER |
| --- | --- |

*C08L 23/10*(2006.01)i; *C08F 10/06*(2006.01)i; *C08K 3/013*(2018.01)i; *C08L 23/08*(2006.01)i; *C08L 23/14*(2006.01)i
FI:   C08L23/10; C08K3/013; C08L23/08; C08F10/06; C08L23/14

According to International Patent Classification (IPC) or to both national classification and IPC

| B. | FIELDS SEARCHED |
| --- | --- |

Minimum documentation searched (classification system followed by classification symbols)

C08L23/10; C08F10/06; C08K3/013; C08L23/08; C08L23/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2010-163614 A (SUMITOMO CHEMICAL COMPANY, LIMITED) 29 July 2010 (2010-07-29)<br>   claims 1-3, paragraphs [0014]-[0015], [0043]-[0058], example 2 | 1-4, 8, 12-18 |
| A | | 5-7, 9-11 |
| X | JP 2006-193643 A (SUMITOMO CHEMICAL COMPANY, LIMITED) 27 July 2006 (2006-07-27)<br>   paragraphs [0073]-[0133], comparative example 1 | 1-2, 4, 8, 12, 14-15, 17-18 |
| A | | 3, 5-7, 9-11, 13, 16 |
| A | JP 2006-193644 A (SUMITOMO CHEMICAL COMPANY, LIMITED) 27 July 2006 (2006-07-27)<br>   paragraphs [0068]-[0102], examples 1-3 | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/003661** |

| Patent document cited in search report | | | Publication date (day/month/year) | Patent family member(s) | | | Publication date (day/month/year) |
| --- | --- | --- | --- | --- | --- | --- | --- |
| JP | 2010-163614 | A | 29 July 2010 | US 2010/0160564 A1<br>claims 1-4, paragraphs [0026]-[0028], [0072]-[0088], example 2<br>DE 102009058318 A1<br>CN 101747556 A | | | |
| JP | 2006-193643 | A | 27 July 2006 | US 2006/0160941 A1<br>paragraphs [0112]-[0205], comparative example 1<br>DE 102006001682 A1<br>CN 1803909 A | | | |
| JP | 2006-193644 | A | 27 July 2006 | US 2006/0160942 A1<br>paragraphs [0102]-[0156], examples 1-3<br>DE 102006001127 A1<br>CN 1803910 A | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006193644 A
- WO 2020217829 A
- JP 61218606 A
- JP 5194685 A
- JP 7216017 A
- JP 9316147 A
- JP 10212319 A
- JP 2004182981 A
- JP 2010168545 A
- JP 2011246699 A
- JP 55075410 A
- JP 2565753 B

**Non-patent literature cited in the description**

- **KAKUGO et al.** *Macromolecules*, 1982, vol. 15, 1150-1152